# EUROPEAN PATENT SPECIFICATION

(11) **EP 3 089 868 B1**
(45) Date of publication and mention of the grant of the patent: **12.12.2018**
(21) Application number: 14828114.0
(22) Date of filing: 30.12.2014
(51) Int. Cl.: G09F 3/02, C09J 11/06, B32B 7/02, B32B 9/02, B32B 27/08, B32B 27/18, B32B 27/36

(54) **COMPOSTABLE FILMS AND COMPOSTABLE LABELS**
KOMPOSTIERBARE FILME UND KOMPOSTIERBARE ETIKETTEN
FILMS COMPOSTABLES ET ÉTIQUETTES COMPOSTABLES

(30) Priority: 30.12.2013 US 201361921596 P; 30.12.2013 US 201361921589 P
(43) Date of publication of application: 09.11.2016
(73) Proprietor: Avery Dennison Corporation, Glendale, CA 91203 (US)
(72) Inventor: CHEN, Wen-Li, A., California 91203 (US); LUO, Qiang, State College, PA 16801 (US); WILLIAMS, Charles, R., Lock Haven, PA 17745 (US); ZAIKOV, Vadim, Perry, OH 44081 (US)
(74) Representative: Müller-Boré & Partner Patentanwälte PartG mbB
(86) International application number: PCT/US2014/072713
(87) International publication number: WO 2015/103239

(56) References cited:
- WO-A2-2009/033096
- US-A1- 2011 123 753
- US-A1- 2014 069 587

## Description

### TECHNICAL FIELD

The presently-disclosed invention relates generally to mono-layer and multi-layer compostable films and compostable labels formed from such compostable films. The labels have many possible applications, such as labeling a variety of different fruit.

### BACKGROUND

The inadequate treatment of municipal solid waste which is being put in landfills and the increasing addition of non-degradable and or non-compostable materials, including plastics, to municipal solid waste streams are combining to drastically reduce the number of landfills available as well as increasing the costs associated with municipal solid waste disposal. While the recycling of reusable components of the waste stream is desirable in many instances, there are some products which do not readily fit into this framework.

A pressure sensitive adhesive (PSA) (also known as "self-adhesive" or "self stick adhesive") is a non-reactive adhesive that forms a bond at room temperature with a variety of dissimilar surfaces when light pressure is applied. No solvent, heat, or radiation is needed to activate the adhesive. PSAs may have applications in pressure-sensitive tapes and/or foils, general purpose labels, note pads, automobile trim, packaging, medical, and a wide variety of other products.

WO 2009/033096 A2 discloses a label comprising a facestock and a layer of pressure sensitive adhesive.

The present invention provides compostable materials films and labels, including aqueous-based dispersions including a plurality of bio-based prepolymers dispersed throughout an aqueous-based continuous phase utilized as pressure sensitive adhesives, which may be used in a variety of applications, such as packaging components and product labeling.

### BRIEF SUMMARY

The present invention relates to a label, comprising a film having a facestock layer including a compostable material and an anti-blocking agent, the facestock layer including at least a first surface, wherein the compostable material is compostable according to ASTM D5338 and/or according to ASTM D6400; and an adhesive layer comprising an adhesive material either positioned adjacent to at least a portion of the first surface of the facestock layer, or positioned one or more layers removed from the first surface of the facestock layer; wherein the adhesive material is an aqueous-based dispersion having a discontinuous phase including a plurality of bio-based prepolymer particulates dispersed throughout an aqueous-based continuous phase, and wherein the adhesive material further includes a catalyst. The present invention also relates to a label comprising a multi-layer film having a facestock layer including a core layer comprising a first compostable material and having a core layer thickness, said core layer including a top surface and a bottom surface, wherein the compostable material is a compostable according to ASTM D5338 and/or according to ASTM D6400; and a first skin layer comprising a second compostable material and having a first skin layer thickness, said first skin layer being either positioned directly adjacent to at least a portion of the top surface of the core layer, or positioned one or more layers removed from the top surface of the core layer, wherein said first skin layer thickness being less than said core layer thickness, wherein the compostable material is compostable according to ASTM D5338 and/or according to ASTM D6400; and an adhesive layer comprising an adhesive material either positioned adjacent to at least a portion of the bottom surface of the core layer, or positioned one or more layers removed from the first surface of the core layer. The invention is defined in the appended claims.

### BRIEF DESCRIPTION OF THE DRAWING(S)

Like numbers refer to like elements throughout.
Figure 1 illustrates a cross-sectional view of a particular multi-layer compostable film according to certain embodiments of the present invention;
Figure 2 illustrates a cross-sectional view of a particular label comprising a mono-layer compostable film according to certain embodiments of the present invention;
Figure 3 illustrates a cross-sectional view of a particular label comprising a multi-layer compostable film according to certain embodiments of the present invention;
Figure 4 illustrates a form including a plurality of compostable labels according to certain embodiments of the present invention;
Figure 5 illustrates a continuous roll of compostable labels according to certain embodiments of the present invention; and
Figure 6 is a plot of modulus as a function of a film's PLA content.

### DETAILED DESCRIPTION

The present invention now will be described more fully hereinafter with reference to the accompanying drawings, in which some, but not all embodiments of the inventions are shown. Indeed, this invention may be embodied in many different forms and should not be construed as limited to the embodiments set forth herein; rather, these embodiments are provided so that this disclosure will satisfy applicable legal requirements. As used in the specification, and in the appended claims, the singular forms "a", "an", "the", include plural referents unless the context clearly dictates otherwise.

The present invention includes compostable films, such as mono-layer and multi-layer films, and labels suitable for a variety labeling and/or tracking applications, such as labeling of fruit (e.g., pears, apples, oranges). In certain embodiments, the films may include a core layer comprising a compostable material, as defined herein. In some mono-layer embodiments, the facestock layer may comprise the only compostable polymer or compostable resin-based layer in the film. Additionally, the present invention includes multi-layer films, such as 2-layer films, 3-layer films, 4-layer films, and more, including a core layer comprising a first compostable material and at least one skin layer also comprising a compostable material, such as a second compostable material, which may be the same or a different material than that of the core layer. Still further, the invention includes labels constructed from such films in combination with aqueous-based dispersions including a plurality of bio-based prepolymers dispersed throughout an aqueous-based continuous phase. The aqueous-based dispersions may be utilized as pressure-sensitive adhesives, and accordingly, the label constructions may be referred to as pressure sensitive labels.

As used herein, the use of the terms "first compostable layer", "second compostable layer", and "third compostable layer" are utilized merely to provide clarity as to which layer of a particular film is being discussed when multi-film embodiments are being described. In certain multi-layer film embodiments, for instance, all film layers may comprise the same of different compostable materials.

The term "compostable" within the context of films and labels as used herein may comprise a material that may be placed into a composition of decaying materials and eventually turns into a nutrient-rich material. In certain embodiments, the term "compostable" as used herein may comprise a plastic that undergoes degradation by biological processes during composting to yield carbon dioxide, water, inorganic compounds, and/or biomass via the action of naturally-occurring microorganisms, such as bacteria and fungi, at a rate consistent with other known compostable materials and that may leave no visible, distinguishable or toxic residue. In accordance with certain embodiments, the term "compostable" as used herein may comprise a material that completely breaks down and returns to nature, such as decomposing into elements found in nature within a reasonably short period of time after disposal, such as within one year. The breakdown of "compostable" films and labels as described herein may be carried out by microorganisms present within, for example, industrial composting facilities. Materials may be identified as "compostable" by pass/fail tests, developed by international standards organization ASTM International, including, for example, D5338 and D6400, the contents of each are hereby incorporated by reference in their entirety.

As used herein the term "aliphatic" is defined as including alkyl, alkenyl, alkynyl, halogenated alkyl, and cycloalkyl groups as described above. A "lower aliphatic" group is a branched or unbranched aliphatic group having from 1 to 10 carbon atoms.

As used herein the term "alkyl" refers to a branched or unbranched saturated hydrocarbon group of 1 to 24 carbon atoms, such as methyl, ethyl, *n*-propyl, isopropyl, *n*-butyl, isobutyl, *t*-butyl, pentyl, hexyl, heptyl, octyl, decyl, tetradecyl, hexadecyl, eicosyl, tetracosyl, and the like. As used herein a "lower alkyl" group is a saturated branched or unbranched hydrocarbon having from 1 to 10 carbon atoms. In some embodiments, alkyl groups have 1 to 4 carbon atoms may be used. Alkyl groups may be "substituted alkyls" wherein one or more hydrogen atoms are substituted with a substituent such as halogen, cycloalkyl, alkoxy, amino, hydroxyl, aryl, or carboxyl.

As used herein the term "aryl" refers to any carbon-based aromatic group including, but not limited to, phenyl, naphthyl, and other suitable aryl compounds. As used herein the term "aryl" also includes "heteroaryl group," which is defined as an aromatic group that has at least one heteroatom incorporated within the ring of the aromatic group. Examples of heteroatoms include, but are not limited to, nitrogen, oxygen, sulfur, and phosphorous. The aryl group may be substituted with one or more groups including, but not limited to, alkyl, alkynyl, alkenyl, aryl, halide, nitro, amino, ester, ketone, aldehyde, hydroxy, carboxylic acid, or alkoxy, or the aryl group may be unsubstituted.

As used herein the term "cycloalkyl" refers to a non-aromatic carbon-based ring composed of at least three carbon atoms. Examples of cycloalkyl groups include, but are not limited to, cyclopropyl, cyclobutyl, cyclopentyl, cyclohexyl, and the like. As used herein the term "heterocycloalkyl group" is a cycloalkyl group as defined above in which at least one of the carbon atoms of the ring is substituted with a heteroatom such as, but not limited to, nitrogen, oxygen, sulfur, or phosphorous.

"Heteroalkyl" means an alkyl group wherein at least one carbon atom of the otherwise alkyl backbone is replaced with a heteroatom, for example, O, S or N.

Prepolymers, as described herein, may be reaction product mixtures after pre-polymerization but prior to (further) polymerization and curing reaction. The reaction mixtures may consist of polymers of a wide spectrum of molecular weights. Oligomers have a low degree of polymerization (relatively low molecular weight). Prepolymer mixtures may include or consist of oligomers.

As used herein the term "bio-based" as used herein may comprise generally renewable materials such as any naturally-occurring material or any naturally-occurring material that has been modified to include one or more reactive functional groups, in which the material may be suitable for use as a prepolymer for the ultimate formation of a PSA. In certain embodiments, the term "bio-based" may comprise a variety of vegetable oils, functionally-modified vegetable oils, plant oils, functionally-modified plant oils, marine oils, functionally modified marine oils, or other ester of unsaturated fatty acids.

The term "dispersion" as used herein may comprise a two-phase system where one phase comprises discrete particulates, such as bio-based prepolymers, distributed throughout a bulk substance, such as an aqueous-based phase, the particulates being the dispersed or internal phase while the bulk substance comprises the continuous or external phase. The distribution of the dispersed phase may either be uniform or heterogeneous.

The term "aqueous-based" as used herein may comprise a solvent comprising at least a portion of water, or mostly water. In certain embodiments the term "aqueous-based" may consist of water alone, water and dispersing agents alone, water and catalysts alone, or water and dispersing agents and catalysts. In certain embodiments, the term "aqueous based" may comprise water, additives (e.g., catalyst, dispersing agents, etc.) and co-solvents, such as alcohols. In accordance with certain embodiments, the aqueous-based continuous phase is devoid of co-solvents.

In accordance with certain embodiments of the present invention, compostable materials for forming compostable films according to the present invention may utilize a variety of known compostable resin polymers, blends thereof, and polymeric compostable materials yet to be discovered. For instance, compostable materials suitable for certain embodiments of the present invention may comprise polylactide (PLA) alone or in blends with other compostable polymeric materials. Additional compostable materials suitable for certain embodiments of the present invention may include aliphatic - aromatic copolyesters, polybutylene adipate co-terephthalates (PBAT), such as ECOFLEX from BASF, or combinations thereof. In certain embodiments, for instance, a film layer, such as a facestock layer, a core layer, or a skin layer, may comprise a blend of PLA and an aliphatic - aromatic copolyester or a blend of PLA and a PBAT.

Commercially-available compostable materials suitable for use in accordance with certain embodiments of the present invention include ECOFLEX (CAS # 60961-73-1 or CAS # 55231-08-8; 1,4-Benzenedicarboxylic acid, polymer with 1,4-butanediol and hexanedioic acid) from BASF; ECOFLEX and PLA blends; Compostable 3002 (a 50-70% copolyester and PLA) from Cereplast; ECOVIO (particular blends of PLA and ECOFLEX, such as a 50/50 blend) from BASF; BioTuf 970 (a PBAT-based material) from Heritage Plastics; MATER-BI (proprietary composition, but claimed to be compostable) from Novamont; Cardia Compostable B-F (a compostable resin based on a blend of thermoplastic starch (TPS), compostable polyesters, and natural plasticizers - 1,4-Benzenedicarboxylic acid, polymer with 1,4-butanediol and hexanedioic acid / TPS blends) from Cardia Bioplastics; or similar compostable plastics.

The term "label" as used herein may comprise an article for attachment to an object, identification of an object, and/or tracking of an object. In accordance with certain embodiments of the present invention, the term "label" may comprise a mono-layer or multi-layer compostable film according to certain embodiments of the present invention.

As used herein, the term "proximate" in the context of the relative positioning of two particular layers of a label may comprise the positioning of a layer being one or more layers removed from another layer. For example, the term "proximate" in the context of the relative positioning of a first layer and a second layer may mean that the first and second layers may be separated by 1, 2, 3, or more intermediate layers, such as layers positioned between the first and second layers.

In some embodiments, the present invention includes a compostable mono-layer film comprising a compostable facestock layer. The facestock layer may be comprised of a compostable material as described herein. For instance, the facestock layer may comprise compostable resin polymers, blends thereof, and polymeric compostable materials yet to be discovered. For instance, compostable materials suitable for utilization as the facestock layer according to certain embodiments of the present invention may comprise polylactide (PLA) alone or in blends with other compostable polymeric materials, aliphatic - aromatic copolyesters, polybutylene adipate co-terephthalates (PBAT), such as ECOFLEX from BASF, or combinations thereof. In certain embodiments, for example, the facestock layer may comprise a blend of PLA and an aliphatic - aromatic copolyester or a blend of PLA and a PBAT. In accordance with certain embodiments, the facestock layer may comprise compostable resins based on thermoplastic starches (TPS) or blends thereof with other compostable resins described herein.

The facestock layer includes an anti-blocking agent. Certain compostable polymeric resins, for instance, may exhibit a "tacky" consistency and tend to adhere together. Such adherence between film layers is termed "blocking" and may be an inherent property of some materials. As such, certain mono-layer compostable film embodiments of the present invention may include an anti-blocking agent within the facestock layer. The anti-blocking agent may be mixed with the masterbatch of the compostable resin to be extruded and ultimately formed into a compostable film, such as by cast processes or blown processes. In certain embodiments, the anti-blocking agent, such as, for example, silica, may be incorporated into an anti-blocking masterbatch at a variety of concentrations including, for example, from about 2% to about 10% by weight of the anti-blocking masterbatch, including each value and range therein. The anti-blocking masterbatch may be compounded with the masterbatch of the compostable resin to be extruded and ultimately formed into a compostable film, such as by cast or blown processes. The anti-blocking agent, such as silica or diatomaceous earth, may be present within the facestock layer may comprise, for instance, from about 0.01% to about 10% by weight of the facestock layer, including each value and range therein. The facestock layer, according to certain embodiments of the present invention, may comprise an anti-blocking agent from about 0.01, 0.02, 0.04, 0.06, 0.08, 0.1, 0.2, 0.3, 0.4, 0.5, 0.75, 1, 1.25, 1.5, 2.0, 2.5, or 3.0 % by weight of the facestock layer to about 10, 8, 6, 4, 3, 2, 1, 0.8, 0.5 or 0.1% by weight of the facestock layer, including each sub-range therein. For example, in some embodiments, the facestock layer may comprise an anti-blocking agent in the range from about 0.01 to about 5 wt. % or from about 0.1 to about 1 wt. % by weight of the facestock layer. Although any suitable anti-blocking agents may be used according to certain embodiments of the present invention, exemplary anti-blocking agents include mineral anti-blocking agents, such as silica and diatomaceous earth, or organic anti-blocking agents, such as polymethylmethacrylate (PMMA) beads.

In accordance with certain embodiments, the facestock layer may include one or more coloring additives comprising dyes, pigments, and/or color forming compounds. Such coloring additives may be incorporated into the masterbatch of the compostable resin prior to film formation. In certain embodiments, the coloring additive comprises titanium dioxide. When used as a coloring additive, titanium dioxide may be referred to as titanium white, Pigment White 6 (PW6), or CI 77891. The color forming additives may comprise an amount sufficient to impart a desired opacity to the resultant film. The desired opacity of the film may, at least partially, dictate the amount of the color forming additive present in the resultant film or facestock layer. For instance, the color forming additives may be present from about 1, 5, 10, or 20% by weight of the facestock layer to about 35, 30, or and 25% by weight of the facestock layer, including each sub-range therein. For example, in some embodiments, the color forming additives may be present from about 5 to about 10% by weight of the facestock layer or from about 5 to about 25% by weight of the facestock layer. In certain embodiments, for example, the resultant mono-layer film may comprise opacity from about 45, 50, 60, 65, 70, 75, 80, 85, or 90% to about 100, 95, or 90%, including each sub-range therein. For example, in some embodiments, a mono-layer film may have opacity from about 70% to about 100%.

In some embodiments, the present invention includes multi-layer compostable films. In accordance with certain embodiments, the multi-layer films may comprise a core layer comprising a first compostable material and having a core-layer thickness. The core layer also includes a top surface and a bottom surface. In certain multi-layer film embodiments, the multi-layer film includes a first skin layer comprising a second compostable material, which may be the same or different than the first compostable material of the core layer, and having a first skin layer thickness. The first skin layer may be positioned proximate to and/or directly adjacent to at least a portion of the top surface of the core layer. In certain embodiments, the first skin layer thickness may be less than the core layer thickness.

In accordance with certain multi-layer film embodiments, multi-layer films may also include a second skin layer comprising a third compostable material, which may be the same or different than the first compostable material of the core layer. The second skin layer has a second skin layer thickness, which may be less than the core layer thickness. The second skin layer thickness may be the same as or different than the first skin layer thickness. The second skin layer may be positioned proximate to and/or directly adjacent to at least a portion of the bottom surface of the core layer.

According to certain multi-layer film embodiments, the first compostable material utilized to form the core layer may be different than at least one of the second compostable material utilized to form the first skin layer and the third compostable material utilized for forming the second skin layer. In certain embodiments, the second compostable material and the third compostable material may be formed from the same material.

In certain embodiments, the first skin layer may be positioned directly adjacent the top surface of said core layer. Similarly, in certain embodiments, the second skin layer may be positioned directly adjacent the bottom surface of the core layer. In certain embodiments, the core layer may be disposed, or sandwiched, directly between the first and second skin layers (i.e., the multi-layer film may be devoid of any intermediate layers between the core layer and the respective skin layers).

The core layer thickness, according to certain embodiments, may comprise from about 30 to 95%, including each value and range therein, such as from about 60 to about 80% or from about 60 to about 90%, of a total aggregate thickness of all layers forming the multi-layer film. For instance, the core layer thickness may comprise from about 30, 40, 50, or 60% of a total aggregate thickness of all layers forming the multi-layer film to about 95, 90, 85, 80, 75, 70, 65, or 60 % of a total aggregate thickness of all layers forming the multi-layer film. For example, in some embodiments, the core layer thickness may comprise from about 60 to about 80% or from about 60 to about 90% of a total aggregate thickness of all layers forming the multi-layer film.

The first skin layer thickness and said second skin layer thickness may each independently comprise from about 2.5 to about 30%, including each value and range therein, of a total aggregate thickness of all layers forming the multi-layer film. In some embodiments, the respective thicknesses of the first skin layer and the second skin layer may be the same. In some embodiments, the respective thicknesses of the first skin layer and the second skin layer may be different. For instance, the first skin layer thickness and said second skin layer thickness may each independently (e.g., the respective thicknesses may be the same or different) comprise from about 2.5, 5, or 10% of a total aggregate thickness of all layers forming the multi-layer film to about 30, 25, 20, 15 or 10 % of a total aggregate thickness of all layers forming the multi-layer film. For example, in some embodiments, the first skin layer thickness and said second skin layer thickness may each independently comprise from about 5 to about 20% of a total aggregate thickness of all layers forming the multi-layer film.

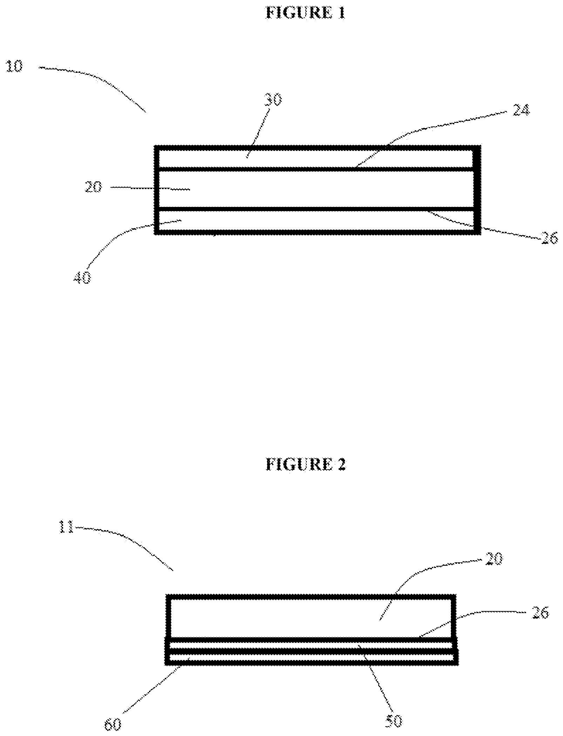

Figure 1 illustrates a cross-sectional view of a particular multi-layer film according to certain embodiments of the present invention. As shown in Figure 1, this particular multi-layer film 10 includes a core layer 20 having a top surface 24 and a bottom surface 26. In this particularly illustrated embodiment, multi-layer film 10 includes a first skin layer 30 positioned directly adjacent the top surface 24 of the core layer 20 and a second skin layer 40 positioned directly adjacent the bottom surface 26 of the core layer 20.

The core layer and respective skin layers may be comprised of one or more compostable materials as described herein. In some embodiments, for example, the core layer and respective skin layers may independently comprise any suitable compostable resin polymers, blends thereof, and polymeric compostable materials, including those currently of hereinafter available. For instance, compostable materials suitable for utilization as the core layer and respective skin layers may independently comprise polylactide (PLA) alone or in blends with other compostable polymeric materials, aliphatic - aromatic copolyesters, polybutylene adipate co-terephthalates (PBAT), such as ECOFLEX from BASF, or combinations thereof. In certain embodiments, for example, the core layer may comprise a blend of PLA and an aliphatic - aromatic copolyester or a blend of PLA and a PBAT. In accordance with certain embodiments, the core layer and respective skin layers may independently comprise compostable resins based on thermoplastic starches (TPS) or blends thereof with other compostable resins described herein.

In accordance with certain compostable multi-layer films of the present invention, at least one of the compostable materials utilized for forming at least one of the layers may comprise PLA, alone or in a blend with other compostable polymeric materials, an aliphatic - aromatic copolyester, a PBAT, or combinations thereof. In accordance with certain embodiments, for example, at least one of the compostable materials utilized for forming at least one of the layers may comprise a blend of PLA and an aliphatic - aromatic copolyester, a blend of PLA and a PBAT, or a TPS alone or blended with other compostable resins.

In certain embodiments, the core layer comprising the first compostable material comprises a blend of PLA and a PBAT. In certain embodiments, at least one of the first skin layer and said second skin layer comprises a PBAT or a blend of PLA and a PBAT. In certain embodiments, each of said first skin layer and said second skin layer comprises a PBAT or a blend of PLA and a PBAT. In certain embodiments, at least one of the first skin layer and the second skin layer comprises TPS alone or blended with other compostable resins.

One or more layers of compostable multi-layer film embodiments include an anti-blocking agent. In certain embodiments, at least the first skin layer may comprise an anti-blocking agent. In such embodiments, for instance, only the first skin layer may include an anti-blocking agent or both skin layers, if present, may include an anti-blocking agent while the core layer may be devoid of an anti-blocking agent. In certain embodiments, for example, the core layer may be devoid of an anti-blocking agent.

The anti-blocking agent may be mixed with the masterbatch of the compostable resin to be extruded and ultimately formed into a compostable skin layer or layers, such as by cast or blown processes. In certain embodiments, the anti-blocking agent, such as, for example, silica, may be incorporated into an anti-blocking masterbatch at a variety of concentrations including, for example, from about 2% to about 10% by weight of the anti-blocking masterbatch, including each value and range therein. The anti-blocking masterbatch may be compounded with the masterbatch of the compostable resin to be extruded and ultimately formed into a compostable skin layer or layers, such as by cast or blown processes. The anti-blocking agent, such as silica, diatomaceous earth, or other suitable anti-blocking agents, may be present within a respective skin layer, for example, from about 0.01% to about from 10% by weight of the respective skin layer, including each value and range therein. The respective skin layers according to certain embodiments of the present invention may comprise an anti-blocking agent from about 0.01, 0.02, 0.04, 0.06, 0.08, 0.1, 0.2, 0.3, 0.4, 0.5, 0.75, 1, 1.25, 1.5, 2.0, 2.5, or 3.0 % by weight of the respective skin layer to about 10, 8, 6, 4, 3, 2, 1, 0.8, 0.5 or 0.1% by weight of the respective skin layer. For example, in some embodiments, the respective skin layers may comprise an anti-blocking agent from about 0.01 to about 5 % by weight of the respective skin layer or from about 0.1 to about 1 % by weight of the respective skin layer. Suitable anti-blocking agents, according to certain embodiments of the present invention, may include mineral anti-blocking agents, such as silica and diatomaceous earth, or organic anti-blocking agents, such as polymethylmethacrylate (PMMA) beads.

In accordance with certain compostable multi-layer film embodiments, one or more of the layers forming the multi-layer films may include one or more coloring additive comprising dyes, pigments, and/or color forming compounds. In certain embodiments, for instance, only the core layer includes such coloring additives while in other embodiments all layers forming the film may include coloring additives. Such coloring additives may be incorporated into the masterbatch of the compostable resin prior of the particular layer, such as a core layer, first skin layer, or second skin layer, to be formed prior to film formation. In certain embodiments, the coloring additive comprises titanium dioxide. When used as a coloring additive, titanium dioxide may be referred to as titanium white, Pigment White 6 (PW6), or CI 77891. The color forming additives may comprise an amount sufficient to impart a desired opacity to the resultant film. The desired opacity of the film may, at least partially, dictate the amount of the color forming additive present in the resultant film. For instance, the color forming additives may be present from about 1, 5, 10, or 20% by weight of the multi-layer film to about 35, 30, or 25% by weight of the multi-layer film, including each sub-range therein. For example, in some embodiment, the color forming additives may be present from about 5 to about 10 %by weight of the multi-layer film or from about 5 to about 25% by weight of the multi-layer film. In certain embodiments, for example, the resultant multi-layer film comprises opacity from about 45, 50, 60, 65, 70, 75, 80, 85, or 90 % to about 100, 95, and 90 %, including each sub-range therein. In some embodiment, for example, the multi-layer film may have opacity from about 70 to about 100 %.

In accordance with certain embodiments, including some mono-layer film embodiments and some multi-layer film embodiments, the films may be receptive to a variety of printing processes. For instance, certain embodiments, including some mono-layer film embodiments and some multi-layer film embodiments, of the present invention may be particularly well suited for supporting and/or receiving printed indicia, such as an ink-image, serial number, barcode, pattern, or other suitable indicia, thereon from a printer or other image-delivering device.

In accordance with certain embodiments, including some mono-layer film embodiments and some multi-layer film embodiments, each of the film layers, such as a core layer or skin layers if present, may exhibit a range of desired physical properties by utilizing various compostable resins, alone or in various blends. In certain embodiments, for instance, the the facestock layer of a mono-layer film and a core layer of a multi-layer film may be tailored to exhibit a particular modulus in the machine direction based on the intended final use of the film. For example, films to be used as compostable labels for labeling, identifying, or tracking objects with curved surfaces, such as various fruit, may be formulated to exhibit a modulus in the machine direction from about 50,000 to about 120,000 psi, including each value and range therein. Core layers exhibiting a higher modulus, such as above 120,000 psi, in the machine direction may be better suited for incorporation into labels intended for adhering to more planar surfaces.

In accordance with certain embodiments, including some mono-layer film embodiments and some multi-layer film embodiments, films of the present invention may be fabricated according to traditional film-forming processes, such as cast and blown processes. Blown film process, for example, may involve extrusion of a plastic through a circular die, followed by a "bubble-like" expansion. Advantages of manufacturing film by such a process include the ability to regulate the film width and thickness by control of the volume of air in the bubble, eliminate end effects, such as edge bead trim and non uniform temperature that may result from flat die film extrusion, and formation of co-extruded, multi-layer films. Cast film processes may involve extrusion of polymers melted through a slot or flat die to form a thin, molten sheet or film. Such films may be "pinned" to the surface of a chill roll, such as a water-cooled roll, air-cooled roll, matte finished roll, matte film finished roll, or chrome-plated roll, by a blast of air from an air knife or vacuum box. Alternatively, the film may be nipped with a rubber or metal nip roll. The film quenches immediately and then may have its edges trimmed prior to winding. Due to the fast quench capabilities, a cast film may provide better optics than a blown film and may be produced at higher line speeds.

The present invention includes labels, such as compostable labels, including a compostable mono-layer film, as described herein, according to certain embodiments of the present invention. For instance, compostable labels utilizing a compostable mono-layer film may comprise a compostable facestock layer as described herein. The compostable mono-layer films utilized for such compostable labels comprises an anti-blocking agent, such as, for example, silica or diatomaceous earth. Such anti-blocking agents may be from about 0.01 to about 10% by weight of the facestock layer, including each value and range therein. The facestock layer may comprise at least a first surface and the labels may include an adhesive coating or layer positioned or coated proximate to and/or directly adjacent to at least a portion of the first surface of the facestock layer. As used herein "adhesive coating" and "adhesive layer" mean that an adhesive is present. If desired, labels comprising a compostable mono-layer film may also include a releasable liner positioned adjacent the adhesive layer such that said adhesive layer is disposed, or sandwiched, directly or indirectly between the first surface of the facestock layer and the releasable liner.

Figure 2 illustrates a cross-sectional view of a particular label comprising a mono-layer compostable film according to certain embodiments of the present invention. As shown in Figure 2, this particular label 11 includes a facestock layer 20 having a first surface 26. In this particularly illustrated embodiment, label 11 includes an adhesive coating or layer 50 positioned directly adjacent the first surface 26 of the core layer 20 and a releasable liner 60 positioned directly adjacent and below the adhesive layer 50.

In another aspect, the present invention includes compostable labels including a compostable multi-layer film according to certain embodiments of the present invention. For instance, compostable labels utilizing compostable multi-layer films may comprise a core layer having at least a first / bottom surface at least partially covered, directly or indirectly, by a skin layer. The labels may include an adhesive coating or layer positioned proximate to and/or adjacent to at least a portion of the skin layer to provide a means for adhering the label to an object. In certain embodiments, the adhesive coating or layer may be positioned or coated directly adjacent the skin layer such that the skin layer is sandwiched, directly or indirectly, between the core layer and the adhesive layer. As noted previously, "adhesive coating" and adhesive layer", as used herein, indicates that an adhesive is present.

In accordance with certain such embodiments, the labels may optionally comprise a releasable liner positioned adjacent said adhesive layer such that the adhesive layer may be disposed, or sandwiched, directly or indirectly between the core layer and the releasable liner.

The adhesive material of the adhesive layer is an aqueous-based dispersion having a discontinuous phase including a plurality of bio-based prepolymer particulates dispersed throughout an aqueous-based continuous phase. The aqueous-based dispersions include at least one catalyst, such as a water-soluble or water-stable catalyst. In some embodiments, the catalyst may reside at least predominantly within the aqueous-based continuous phase of the dispersion. For example, in some embodiments the catalyst may reside , over 50%, or over 75%, or over 90% within the aqueous-based continuous phase of the dispersion. In this regard, pre-mature final polymerization of the bio-based prepolymer components/particulates may be mitigated. However, even if the individual bio-based prepolymer components/particulates begin to polymerize and increase in molecular weight, their dispersion in the continuous aqueous-based phase may ensure that the viscosity of the composition remains within a range such that the composition may still be easily coated onto a variety of substrates, such as a backing substrate for manufacturing a PSA construct. Once coated onto a substrate, the compositions may undergo a final polymerization of cure upon the application of a sufficient amount of heat (e.g., thermally cured).

The bio-based prepolymers may include any currently available or suitable bio-based prepolymer or bio-based warm-melt adhesive material, such as prepolymers of polymerized. For instance, a traditionally manufactured bio-based warm melt adhesive material may be utilized in accordance with certain embodiments of the present invention by, for example, dispersing the bio-based warm-melt adhesive throughout an aqueous-based continuous phase to form aqueous-based dispersions according to certain embodiments of the present invention.

Aqueous-based dispersions according to certain embodiments disclosed herein may be formed by any number of methods recognized by those having skill in the art. In certain embodiments, for example, the aqueous-based dispersions may be obtained via traditional use of a colloid mill while in other embodiments the aqueous-based dispersions may be formed through a melt-kneading process. In certain embodiments, the aqueous-based dispersions may be formed by using techniques, for example, in accordance with the procedures as described in WO2005021638.

While any suitable method may be used to produce the aqueous-based dispersions, in one embodiment, the aqueous-based dispersions may be formed through a melt--kneading process. For example, the kneader may comprise a BANBURY® mixer, single-screw extruder or a multi-screw extruder. The melt-kneading may be conducted under the conditions that are typically used for melt-kneading resinous materials.

In one particular embodiment, the process includes melt-kneading the components that make up the aqueous-based dispersions. The melt-kneading machine may include multiple inlets for the various components. For example, the extruder may include four inlets placed in series. Further, if desired, a vacuum vent may be added at an optional position of the extruder. In certain embodiments, for example, one or more bio-based prepolymer materials, water, and/or dispersing agents may be melt-kneaded in an extruder to form an aqueous-based dispersion. In this regard, a process for producing the aqueous-based dispersions in accordance with certain embodiments of the present invention is not particularly limited. In one embodiment, for example, is a process comprising melt-kneading the above-mentioned components according to U.S. Patent No. 5,756,659 and U.S. Patent No. 6,455,636.

Dispersions formed in accordance with certain embodiments of the present invention may comprise an average particle size of between about 0.1 µm to about 10 µm, between about 0.1 µm to about 5.0 µm, or between about 0.2 µm to about 1 µm, including all intermittent values in these ranges. In other embodiments, dispersions may have an average particle size of from about 0.5 µm to about 3.0 µm, including all intermittent values in these ranges. In other embodiments, from about 0.8 µm to about 1.2 µm, including all intermittent values in these ranges. The term "average particle size" as used herein may comprise the volume-mean particulate size of the dispersed bio-based prepolymers. In order to measure the particulate size, laser-diffraction techniques, for example, may be employed. Moreover, the particulate size as used herein refers to the diameter (or apparent diameter) of the bio-based prepolymer in the dispersion. For particulates that are not spherical, the diameter of the particle is the average of the long and short axes of the particle. Particle sizes may be measured on a Beckman-Coulter LS230 laser-diffraction particle size analyzer or other suitable device.

The aqueous-based dispersions include one or more catalysts. In some embodiments, the one or more catalysts may comprise water stable and/or water soluble catalysts, such as water soluble titanates and certain catalysts suitable for epoxy-acid reactions (as long as the catalyst is at least partially stable and/or soluble in water). In accordance with certain embodiments, the one or more catalysts may comprise an organic titanate catalyst, a zirconate catalyst, or combinations thereof. In certain embodiments, for instance, the catalyst may comprise a triethanolamine titanium complex. One exemplary catalyst comprises TYZOR TE, which is commercially available from Dorf Ketal.

The aqueous-based dispersions may comprise one or more dispersing agents. Dispersing agents include surface-active agents that may be added to a suspending medium (e.g., continuous phase) to promote a more uniform and/or maximum separation of suspended or dispersed particulates therein. Although any suitable dispersing agents may be utilized according to certain embodiments, exemplary dispersing agents may include an anionic, cationic and/or nonionic dispersing agent, using, for example, from about 0.01% to about 5% by weight of dispersing agent on the weight of composition comprising an aqueous-based dispersion. In certain embodiments, combinations of anionic and nonionic emulsifiers may optionally also be used.

Suitable cationic dispersion agents according to certain embodiments, for example, may include lauryl-pyridinium chlorides, cetyldimethyl amine acetate, and alkyldimethylbenzylammonium chlorides in which the alkyl group has from about 8 to about 18 carbon atoms.

Suitable anionic dispersing agents according to certain embodiments, for example, may include alkyl(phenol) polyglycol ethers, such as nonylphenol ether (10-15 EO) sulphate, C13 polyglycol ether (9-15 EO) sulphate, 2-ethylhexyl sulphate, and the like; higher fatty alcohol sulfates, such as sodium lauryl sulfate, and the like; alkylaryl sulfonates such as sodium or potassium isopropylbenzene sulfonates or isopropyl naphthalene sulfonates, and the like; alkali metal higher alkyl sulfosuccinates, such as sodium octyl sulfosuccinate, sodium N-methyl, N-palmitoyltaurate, sodium oleyl isothionate, and the like; and alkali metal salts of alkylarylpolyethoxyethanol sulfates or sulfonates, such as sodium tert-octylphenoxypolyethoxyethyl sulfate having 1 to 5 oxyethylene units, and the like.

Suitable non-ionic dispersing agents according to certain embodiments, for example, include alkylphenoxypolyethoxyethanols having alkyl groups of from about 7 to about 18 carbon atoms and from about 6 to about 60 oxyethylene units, such as heptylphenoxypolyethoxy-thanols, methyloctylphenoxypolyethoxyethanols, and the like; polyethoxy-thanol derivatives of methylene-linked alkyl phenols; sulfur-containing agents such as those made by condensing from about 6 to about 60 moles of ethylene oxide with nonyl mercaptan, dodecyl mercaptan, and the like, or with alkylthiophenols wherein the alkyl groups contain from about 6 to about 16 carbon atoms; ethylene oxide derivatives of long-chained carboxylic acids, such as lauric acid, myristic acid, palmitic acid, oleic acid, and the like, or mixtures of acids such as those found in tall oil containing from about 6 to about 60 oxyethylene units per molecule; analagous ethylene oxide condensates of long-chained alcohols such as octyl, decyl, lauryl, or cetyl alcohols, ethylene oxide derivative of etherified or esterified polyhydroxy compounds having a hydrophobic hydrocarbon chain, such as sorbitan monostearate containing from about 6 to about 60 oxyethylene units; also, ethylene oxide condensates of long-chain or branched chain amines, such as dodecyl amine, hexadecyl amine, and octadecyl amine, containing from about 6 to about 60 oxyethylene units; block copolymers of ethylene oxide sections combined with one or more hydrophobic propylene oxide sections. Mixtures of alkyl benzenesulfonates and ethoxylated alkylphenols may be employed.

Any bio-based prepolymers may be utilized. In certain embodiments, for instance, the bio-based prepolymers comprise one or more epoxidized vegetable oils. In certain such embodiments, the prepolymers comprise the reaction product of (i) at least one epoxidized vegetable oil (EVO) and (ii) a dimer acid or anhydride thereof, or a trimer acid or anhydride thereof, a polymerized fatty acid or anhydride thereof. For example, in some embodiments the prepolymers may comprise an epoxidized soybean oil.

In certain embodiments, the dimer acid may be a dimer of an unsaturated fatty acid or a mixture of the dimer and a small amount, such as up to 10 weight percent, of a monomer or trimer of the unsaturated fatty acid. The trimer acid may be a trimer of an unsaturated fatty acid or a mixture of the trimer and a small amount, such as up to 10 weight percent, of a monomer or dimer of the unsaturated fatty acid. A polymerized fatty acid may contain four or more unsaturated fatty acid residues. The dimer acid, trimer acid or polymerized fatty acid may be a mixture of dimerized, trimerized or polymerized unsaturated fatty acids. In some embodiments, suitable unsaturated fatty acids include carboxylic acids having about 12 to about 24 carbon atoms and at least one unsaturated bond per molecule. In some embodiments, suitable acids having one unsaturated bond include, for example, oleic acid, elaidic acid and cetoleic acid may be used. In some embodiments, suitable fatty acids having two unsaturated bonds include sorbic acid and linoleic acid may be used. In some embodiments, suitable fatty acids having three or more of unsaturated bonds include linoleinic acid and arachidonic acid may also be used. The dimer acid, trimer acid, or polymerized fatty acid may be partially or fully hydrogenated. Illustrative dimer acids may have the structure: 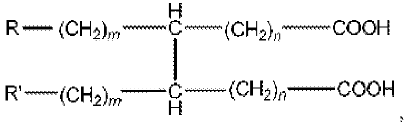 or 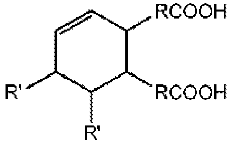 where R and R' may be the same or different, saturated, unsaturated or polyunsaturated, straight or branched alkyl groups having from 1 independently to 30 carbon atoms. There may be more than one C-C crosslink between the monofunctional carboxylic acid moieties. Alternatively, R and R' may be the same or different, saturated, unsaturated or polyunsaturated, straight alkyl groups having from 1 independently to about 20 carbon atoms, or having from 1 independently to about 8 carbon atoms; n and m are the same or different, ranging from 1 independently to about 10, or ranging from about 4 independently to about 16. In other non-limiting embodiments, R may be butyl and R' may be octyl.

In another embodiment, the dimer acid may have the definition found in U.S. Pat. No. 3,287,273. Such commercial dimer acids may be produced by the polymerization of unsaturated C₁₈ fatty acids to form C₃₆ dibasic dimer acids. Depending on the raw materials used in the process, the C₁₈ monomeric acid may be linoleic acid or oleic acid or mixtures thereof. The resulting dimer acides may therefore be the dimers of linoleic acid, oleic acid or a mixture thereof. 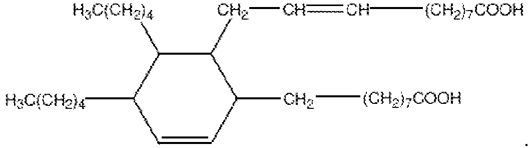 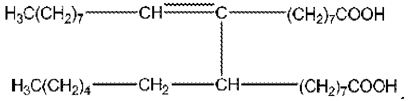 and

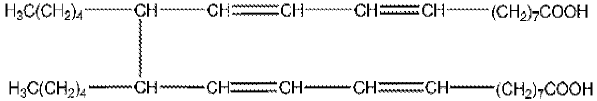

The structure of the trimer acids and polymerized fatty acids include three and more unsaturated fatty acid residues. They may be reaction products between unsaturated fatty acids, dimer acids thereof, and/or trimer acids and polymerized fatty acids thereof, *via* Diels-Alder and/or radical mechanism.

In accordance with certain embodiments, the bio-based prepolymers may comprise the reaction product of at least one EVO and one or more of the following: (i) a dimer acid or anhydride thereof, a trimer acid or anhydride thereof, or a polymerized fatty acid or anhydride thereof; or (ii) a prepolymer or oligomer capped with a carboxylic acid group at both prepolymer or oligomer chain ends, or a branched prepolymer or oligomer with at least two of the prepolymer or oligomer branches and chain ends capped with a carboxylic acid group, wherein the carboxylic acid-capped prepolymer or oligomer is made from (a) an excess of a dibasic acid reacted with (b) a glycidyl or an epoxidized compound having at least two epoxy groups, a diol or polyol, a diamine, or a combination thereof; or a combination of (i) and (ii).

According to such embodiments, the EVO (which may be a modified functionally EVO) is reacted with a carboxylic acid-capped prepolymer or carboxylic acid-capped oligomer to produce a PSA suitable material, wherein the carboxylic acid-capped prepolymer or carboxylic acid-capped oligomer is derived from reacting an excess of a dibasic acid with at least one agent to provide a prepolymer or oligomer capped with a carboxylic acid group at both prepolymer or oligomer chain ends. The carboxylic acid-capped prepolymer or carboxylic acid-capped oligomer may then itself function as a "dibasic acid." In some embodiments, the prepolymer or oligomer may be terminated with the monomeric dibasic acid initial reactant so that the prepolymer or oligomer is capped with a carboxylic acid group at both chain ends. The prepolymer or oligomer is a polycondensated product that is terminated with the monomeric dibasic acid such that the chain ends are a moiety of the dibasic acid (i.e., carboxylic acid groups). The pre-polymerization may introduce "hard" segments/block into the polymer, and thus increase the strength and modulus to the PSA suitable material. For example, the PSA suitable material may be made by initially pre-polymerizing a dimer acid with at least one diepoxy to produce a thermoplastic epoxy polymer or oligomer capped with carboxylic acid groups at both chain ends, followed by further polymerizing the resulting thermoplastic epoxy polymer or oligomer with at least one epoxidized vegetable oil.

The dibasic acids used may include any compound that contains two carboxylic acid functional groups, and derivatives or analogs thereof. Compounds that include two displaceable active hydrogen atoms per molecule but in which those hydrogen atoms are not part of a carboxylic acid moiety are also considered to be dibasic acids from the viewpoint of polycondensation chemistry. For example, the "displaceable active hydrogen atoms" may be part of hydroxyl groups (-OH), amine groups (-NHR and -NH₂), or thiol groups (-SH), sulfonamides. More than one dibasic acid may be utilized in a single mixture if desired. Dibasic acids may be aliphatic (linear, branch or cyclic) saturated carboxylic acids containing up to 30 carbon atoms, or from 2 to 22 carbon atoms. Such dibasic acids may include, for example, oxalic acid, malonic acid, itaconic acid, succinic acid, glutaric acid, adipic acid, pimelic acid, suberic acid, azelaic acid, sebacic acid, brassylic acid, and docosanedioic acid. Dibasic acids may also be aromatic acids and derivatives thereof, including, without limitation, phthalic acid, isophthalic acid, and terephthalic acid. Dibasic acid may also be produced from other derivatives, such as anhydrides. Specific examples include, without limitation, succinic anhydride, itaconic anhydride, and phthalic anhydride. In some embodiments, the dibasic acids or anhydride derivatives may be derived from natural resources. In addition to the high energy-consuming traditional processes for the production of dibasic acids, alternative accesses to various dibasic acids from renewable feedstocks are known in the art. *See, e.g.,* "Lipids as renewable resources: current state of chemical and biotechnological conversion and diversification" by J. O. Metzger and U. Bornscheuer (Appl. Microbiol. Biotechnol. 2006). Tribasic or higher H-functionality acids include, without limitation, 1,2,3,4- butanetetracarboxylic acid, ethylenediamine tetraacetic acid, citric acid, trimer acids, polymerized fatty acids. Acids obtained or derived from renewable raw materials include, for example, trimer acids, polymerized fatty acids, and citric acid may be used in some embodiments. Citric acid is a tribasic organic acid existing in a variety of fruits and vegetables, most notably citrus fruits. It is a commodity chemical produced and consumed throughout the world. The global production of citric acid in 2007 was over 1.6 million tons, and the world demand is still increasing (*See, e.g.,* "citric acid production" by M. Berovic and M. Legisa (Biotechnol. Annu. Rev. 2007). The term "dibasic acids" may also be inclusive of the dimer acids, trimer acid, and polymerized fatty acids described above.

In certain embodiments, the EVO may be reacted with a monobasic acid or anhydride thereof, for example, to produce a modified epoxidized vegetable oil that is then reacted with (i) a dimer acid or anhydride thereof, a trimer acid or anhydride thereof, a polymerized fatty acid or anhydride thereof, or a mixture thereof, or (ii) a prepolymer or oligomer capped with a carboxylic acid group at both prepolymer or oligomer chain ends, or a branched prepolymer or oligomer with at least two of the prepolymer or oligomer branches and chain ends capped with a carboxylic acid group, to produce a pressure sensitive adhesive composition.

According to certain embodiments of the present invention, the bio-based prepolymers may comprise one or more epoxidized fatty acids from at least one plant oil, marine oil, other ester of unsaturated fatty acid, or combinations thereof. For instance, the bio-based prepolymers may comprise an epoxidized oleic acid, an epoxidized linoleic acid (including fully and partially epoxidized linoleic acid), or an epoxidized linolenic acid (including fully and partially epoxidized linolenic acid) from at least one plant oil, marine oil, other ester of unsaturated fatty acid, or combinations thereof.

In certain embodiments, the bio-based prepolymers comprise epoxidized fatty acids that have been pre-polymerized by reacting the epoxidized fatty acids with (i) at least one carboxylic acid compound having at least two carboxylic acid groups or (ii) at least one epoxide having at least two epoxy groups. In practice, the epoxidized fatty acids and optionally at least one carboxylic acid compound bearing at least two carboxylic acid functional groups may be pre-polymerized to a degree that cross-linking does not obviously occur and the viscosity of the intermediate reaction mixture is appropriate to allow dispersion into the aqueous-based continuous phase.

Carboxylic acid compounds (or carboxylic acids) used in accordance with certain embodiments of the present invention may include any compound that contains at least two carboxylic acid functional groups, and derivatives or analogs thereof. More than one carboxylic acid compound may be utilized in a single mixture if desired. Carboxylic acid compounds may include dibasic aliphatic (linear, branch or cyclic) carboxylic acids, which include, without limitation, oxalic acid, malonic acid, succinic acid, maleic acid, fumaric acid, itaconic acid, methylsuccinic acid, glutaric acid, adipic acid, pimelic acid, suberic acid, azelaic acid, sebacic acid, brassylic acid, octadecanedioic acid, and docosanedioic acid. Dibasic acids may also be aromatic acids and derivatives thereof, including, without limitation, phthalic acid, isophthalic acid and terephthalic acid. Dibasic acids may also be used in the form of anhydrides. Specific examples include, without limitation, succinic anhydride, maleic anhydride, itaconic anhydride, methylsuccinic anhydride, and phthalic anhydride. In some embodiments, the dibasic acids or anhydride derivatives may originate from renewable natural resources. For example, itaconic acid is a naturally-occurring compound produced industrially by fermentation of carbohydrates. Succinic acid may be also obtained by fermentation of sugar. Dimer acids, or dimerized fatty acids, are dicarboxylic acids that may be prepared by dimerizing unsaturated fatty acids usually on clay catalysts (e.g., montmorillonite clay). Tall oil fatty acids (consisting mainly of oleic and linoleic acids) and other fatty acids from plant oils *(e.g.,* erucic acid, linolenic acid), marine oils, or tallow (e.g., high oleic tallow) may be starting materials to prepare dimer acids (*See, e.g,* "Preparation of Meadowfoam Dimer Acids and Dimer Esters and Their Use as Lubricants" by D. A. Burg and R. Kleiman (JAOCS. 1991); "Fats and oils as oleochemical raw materials" by K. Hill (Pure Appl. Chem. 2000)). The dimer acids thereof may be usually unsaturated and may be hydrogenated to give saturated forms. It should be noted that dibasic acids with carboxylic acid groups of different reactivity, such as itaconic acid and methylsuccinic acid may be used in the present PSA compositions to increase the "open time" as explained below. In particular, the pre-polymerization stage of some embodiments, almost only the carboxylic acid group of high reactivity react with the epoxy groups if the reaction conditions (such as temperature and the nature and amount of catalyst) are controlled so that no obvious cross-linking occurs, the remaining carboxylic acid group of lower reactivity may take part in crosslinking reaction in the curing stage.

Carboxylic acid compounds may also comprise polybasic acids which include, without limitation, citric acid, trimer acids, polymerized fatty acids, 1,2,3,4-butanetetracarboxylic acid, and ethylenediamine tetraacetic acid, trimellitic acid, and trimellitic anhydride. Acids may be obtained from renewable raw materials may include citric acid, trimer acids and polymerized fatty acids. Trimer acids and polymerized fatty acids are currently prepared by polymerizing unsaturated fatty acids usually on clay catalysts *(e.g.,* montmorillonite clay). Tall oil fatty acids (consisting mainly of oleic and linoleic acids), and other fatty acids from plant oils *(e.g.,* erucic acid, linolenic acid), marine oils, or tallow *(e.g.,* high oleic tallow) may be starting materials to prepare trimer acids and polymerized fatty acids or mixtures thereof.

From the viewpoint of chemistry, compounds that include two or more displaceable active hydrogen atoms per molecule but in which the hydrogen atoms are not part of a carboxylic acid moiety may be also used herein instead of "carboxylic acid compounds". Like carboxylic acid compounds, these compounds may react with epoxy group *via* the "displaceable active hydrogen atoms" which may be part of hydroxyl groups (-OH), amine groups (-NHR and -NH₂), thiol groups (-SH), sulfonamides, or other groups.

In addition, the "carboxylic acid compounds" also include those derived from the carboxylic acid compounds described above. The derivatives may be oligomers or polymers bearing at least two carboxylic acid groups as end groups and/or pendant groups. For example, an excess of dibasic or polybasic acid reacts with glycidyl-containing compounds or epoxides having at least two epoxy or oxirane groups, diols or polyol, or diamines to give theromoplastic polymers or oligomers bearing at least two carboxylic acid groups as end groups and/or pendant groups.

Epoxides suitable for embodiments of the present invention may include any compound that contains at least two epoxy or oxirane functional groups, and derivatives or analogs thereof. More than one epoxide may be utilized in a single mixture if desired. Diepoxides may be diglycidyl compounds or epoxides having two epoxy groups, including, without limitation, bisphenol A diglycidyl ether, bisphenol A ethoxylate diglycidyl ether, bisphenol A propoxylate diglycidyl ether, bisphenol F diglycidyl ether, bisphenol F ethoxylate diglycidyl ether, bisphenol F propoxylate diglycidyl ether, ethylene glycol diglycidyl ether, diethylene glycol diglycidyl ether, poly(ethylene glycol) diglycidyl ether, propylene glycol diglycidyl ether, dipropylene glycol diglycidyl ether, poly(propylene glycol) diglycidyl ether, 1,3-butanediol diglycidyl ether, 1,4-butanediol diglycidyl ether, neopentyl glycol diglycidyl ether, glycerol diglycidyl ether, diglycidyl 1,2,3,6-tetrahydrophthalate, 1,2-cyclohexanedicarboxylate diglycidyl ether, dimer acid diglycidyl ester, 1,4-cyclohexanedimethanol diglycidyl ether, resorcinol diglycidyl ether, poly(dimethylsiloxane) terminated with diglycidyl ether, epoxidized linoleic acid ester, epoxidized plant oils with two epoxy functional groups epoxidized marine oils with two epoxy functional groups, or epoxidized animal fats with two epoxy functional groups. Tribasic or higher epoxy-functionality compounds include, without limitation, trimethylolpropane triglycidyl ether, trimethylolethane triglycidyl ether, *N,N*-diglycidyl-4-glycidyloxyaniline, 4,4'-methylene bis(*N,N*-diglycidylaniline), *tris*(4-hydroxyphenyl)methane triglycidyl ether, *tris*(2,3-epoxypropyl) cyanurate, *tris*(2,3-epoxypropyl) isocyanurate, poly(ethylene-co-glycidyl methacrylate), epoxy functionalized polybutadiene, epoxidized plant oils having no less than three epoxy functional groups, epoxidized marine oils with no less than three epoxy functional groups, epoxidized animal fats with no less than three epoxy functional groups, and epoxidized fatty acid esters having no less than three epoxy functional groups like epoxidized linolenic acid ester.

In accordance with certain embodiments, the epoxidized fatty acid may have a structure of R-X₁-R-X₂-R-X₃-R-C(=O)-OH, wherein X₁, X₂, and X₃ each independently represent 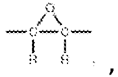 or a substituted or unsubstituted alkyl or heteroalkyl group, provided at least one of X₁, X₂, or X₃ is 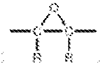 and each R independently represents hydrogen or a substituted or unsubstituted alkyl or heteroalkyl group.

In accordance with certain embodiments according to the present invention, the bio-based prepolymers may comprise a thermoplastic epoxy prepolymer or oligomer formed by the reaction product of at least one dibasic acid or anhydride thereof with at least one polyfunctional epoxide. In certain embodiments, the thermoplastic epoxy prepolymer or oligomer has been thermally cured to form warm a melt adhesive. The warm melt adhesive may be dispersed throughout the aqueous-based continuous phase in accordance with embodiments of the present invention.

Polyfunctional epoxides may comprise compounds having three or more epoxy functional groups per molecule. The polyfunctional epoxides include, without limitation, trimethylolpropane triglycidyl ether, trimethylolethane triglycidyl ether, *N,N*-diglycidyl-4-glycidyloxyaniline, 4,4'-methylene *bis*(*N,N*-diglycidylaniline), *tris*(4-hydroxyphenyl)methane triglycidyl ether, *tris*(2,3-epoxypropyl) cyanurate, *tris*(2,3- epoxypropyl) isocyanurate, poly(ethylene-co-glycidyl methacrylate), epoxy functionalized polybutadiene, and epoxidized fatty acid esters having no less than three epoxy functional groups, such as, for example, epoxidized linolenic acid ester. The epoxides, dibasic acids, and in some embodiments polyfunctional epoxides and polybasic acids, may all be obtained or derived from natural resources such that the resulting compositions are entirely renewable.

Bio-based prepolymers according to certain embodiments of the present invention may comprise a carboxylic acid-capped prepolymer or oligomer with at least one polyfunctional epoxide comprising the reaction product of (i) at least one dibasic acid or anhydride thereof with (ii) at least one epoxide having at least two epoxy groups, at least one diol or polyol, or at least one diamine at a stoichiometric molar excess of reactive carboxylic acid groups relative to reactive epoxy groups, hydroxyl groups, or amine groups to produce a thermoplastic prepolymer or oligomer capped with a carboxylic acid group at both prepolymer or oligomer chain ends, or a thermoplastic branched prepolymer or oligomer with at least two of the prepolymer or oligomer branches and chain ends capped with a carboxylic acid group. In certain embodiments, the carboxylic acid-capped prepolymer or oligomer with at least one polyfunctional epoxide has been thermally cured to form a warm melt adhesive. The warm melt adhesive may be dispersed throughout the aqueous-based continuous phase in accordance with embodiments of the present invention.

Illustrative diols (or glycols) include, without limitation, ethylene glycol, 1,4-butanediol, 1,5-pentanediol, 1,8-octanediol, 1,2-propanediol, 1,2-butanediol, 2,3-butanediol, 1,3-butanedio1,1,2-pentanediol, ethohexadiol, p-menthane-3,8-diol, 2- methy1-2,4-pentanediol. Illustrative polyols include, without limitation, glycerin, trimethylolpropane, pentaerythritol, maltitol, sorbitol, xylitol, and isomalt.

An illustrative repeating unit for the pre-polymers or oligomers described above derived from diols is represented as follows: 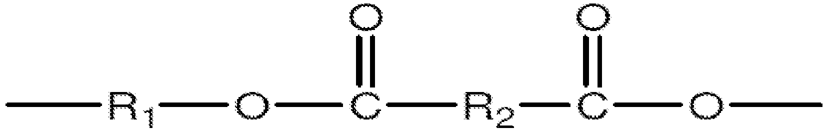 wherein each of R₁ and R₂ independently represents hydrogen or a substituted or unsubstituted alkyl or heteroalkyl group.

Illustrative diamines include, without limitation, 1,2-diaminoethane, 1,3- diaminopropane, butane-1,4-diamine, pentane-1,5-diamine, hexane-1,6-diamine, 1,2- diaminopropane, diphenylethylenediamine, diaminocyclohexane, *o*-xylylenediamine, *m*-xylylenediamine, *p-*xylylenediamine, *o*-phenylenediamine, *m*-phenylenediamine, *p*-phenylenediamine, 2,5-diaminotoluene, dimethyl-4-phenylenediamine, *N,N'*-di-2-butyl-1,4-phenylenediamine, 4,4'-diaminobiphenyl, 1,8-diaminonaphthalene, and other compounds having two or more primary amino groups (-NH₂).

An illustrative repeating unit for the pre-polymers or oligomers described above derived from diamines is represented as follows: 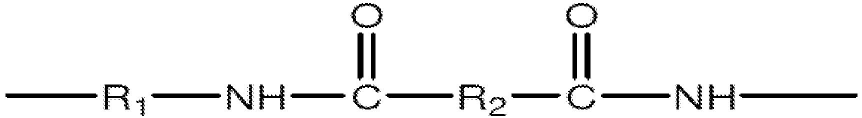 wherein, each of R₁ and R₂ independently represents hydrogen or a substituted or unsubstituted homoalkyl or heteroalkyl group.

In accordance with certain embodiments, the bio-based prepolymers may comprise an epoxy-capped prepolymer or oligomer with at least one polybasic acid comprising the reaction product of (i) at least one dibasic acid or anhydride thereof with (ii) at least one epoxide having at least two epoxy or oxirane groups at a stoichiometric molar excess of reactive epoxy or oxirane groups relative to reactive carboxylic acid groups to produce a thermoplastic prepolymer or oligomer capped with an epoxy or an oxirane group at both prepolymer or oligomer chain ends, or a thermoplastic branched prepolymer or oligomer with at least two of the prepolymer or oligomer branches and chain ends capped with an epoxy or oxirane groups. In certain embodiments, the epoxy-capped prepolymer or oligomer with at least one polybasic acid has been thermally cured to form a warm melt adhesive. The warm melt adhesive may be dispersed throughout the aqueous-based continuous phase in accordance with embodiments of the present invention.

In accordance with certain embodiments, the dibasic acid may comprise a dimer acid. In some embodiments, the dibasic acid may comprise a dimer acid having an average of two carboxylic acid groups per molecule. In certain embodiments, the dimer acid may comprise a dimer of oleic acid and/or linoleic acid. In yet additional embodiments, the dibasic acid may comprise sebacic acid.

In accordance with certain embodiments, the polyfunctional epoxide includes three or more epoxy functional groups. In certain embodiments, the polyfunctional epoxide comprises an aliphatic triglycidyl or polyglycidyl ether or an aromatic triglycidyl or polyglycidyl ether, and in certain other embodiments the polyfunctional epoxide comprises an epoxy functionalized polybutadiene or an epoxidized fatty acid ester.

According to certain embodiments, the amount of dibasic acid or anhydride thereof reacted with the polyfunctional epoxide is in a molar ratio of carboxylic acid groups present in the dibasic acid to epoxy functional groups present in the polyfunctional epoxide ranging from 3:1 to 1:3.

In accordance with certain embodiments, the average molecular weight of the bio-based prepolymers may comprise from about 500,000 to about 1,000,000, including all intermittent values and ranges therein, such as from about 600,000 to about 900,000, or from about 650,000 to about 850,000.

In accordance with certain embodiments, the dispersed phase comprising the plurality of bio-based prepolymers may also comprise one or more additives. In certain embodiments, for instance, the dispersed phase comprising the plurality of bio-based prepolymers may also comprise one or more tackifiers. In such embodiments, the tackifier may be added into the warm melt adhesive prior to dispersing into the aqueous-based continuous phase. In this regard, the plurality of bio-based prepolymers may also comprise tackifiers.

Any suitable tackifiers may be utilized. Exemplary tackifiers may comprise: hydrogenated styrene-based resins, such as Regalrez™; resins designated as 1018, 1033, 1065, 1078, 1094 and 1126, manufactured and sold by Hercules, Inc.; Regalrez™ 6108, a 60% hydrogenated aromatic resin also manufactured by Hercules; hydrogenated C5 and/or C9 hydrocarbon resin feed stocks such as Arkon™ P-70, P-90, P-100, P-115, M-90, M-100, M-110 and M-120 resins manufactured and sold by Arakawa Chemical; and Regalite™ R-100, MGB-63, MGB-67, MGB-70 resins manufactured and sold by Hercules, Inc.; hydrogenated polycyclo-pentadienes such as Escorez™ 5320, 5300 and 5380 resins, manufactured and sold by Exxon Chemical; hydrogenated polyterpene and other naturally occurring resins, such as Clearon™ P-105, P-115, P-125, M-105, M-115 manufactured and sold by Yasuhara Yushi Kogyo Co. Ltd. of Japan and Eastotack™ H-100, H-115 and H-130 resins manufactured and sold by Eastman Chemical; Kaydol™ hydrogenated mineral oil manufactured and sold by Witco Chemical, and the like of each of the foregoing.

In accordance with certain embodiments of the present invention, the compositions comprising aqueous-based dispersions may comprise a total solids content of from about 30% to about 70%, or from about 50% to about 60%. The total solids content may be varied depending, for example, based on the desired final viscosity for coating and/or the average molecular weight to the bio-based prepolymers dispersed therein.

As noted previously, aqueous-based dispersions according to certain embodiments of the present invention provide an improvement in handling and application or deposition onto a variety of substrates, such as for making a PSA construct. This improvement in handling and application may be due, at least in part, to the relatively low viscosity of the aqueous-based dispersions according to embodiments of the present invention as compared to traditional warm/hot melt adhesives. For instance, the viscosity of the aqueous-based dispersions according to certain embodiments may comprise from about 5 to about 1500 cp at 20°C or from about 5 to about 500 cp at 20°C. The relatively low viscosities of the aqueous-based dispersions according to certain embodiments ensure easier and more complete or thorough coating/coverage of a substrate for preparation of PSA constructs, such as adhesive articles.

In another aspect, the present invention provides a method of manufacturing PSA constructs. Methods according to certain embodiments of the present invention may comprise applying an aqueous-based dispersion according embodiments of the present invention onto a backing substrate and curing the aqueous-based dispersion. In accordance with certain embodiments of the present invention, the aqueous-based dispersion may be thermally cured by simply heating the dispersion and/or PSA construct. For instance, the curing step may comprise heating the dispersion and/or PSA construct to drive-off, such as by evaporation or otherwise) the continuous aqueous-based phase. Upon evaporation of the continuous aqueous-based phase, the catalyst held within the continuous aqueous-based phase is capable of initiating and/or participating in the curing process of the plurality of bio-based prepolymers to form a generally uniform coating or layer of a polymerized product comprising a PSA.

In accordance with certain embodiments, the aqueous-based dispersion may be thermally cured by heating the aqueous-based dispersion or PSA construct coated with the aqueous-based dispersion to a temperature of at least about 100°C. In some embodiments, the curing step comprises heating the aqueous-based dispersion or PSA construct coated with the aqueous-based dispersionto temperature from between greater than about 100°C and about 140°C. In some embodiments, the curing or final polymerization step comprises increasing the temperature as noted previously and driving-off the aqueous-phase and allowing the bio-based prepolymers to polymerize via interaction with the catalyst.

In one example of the disclosed adhesive, 200 g of Dimmer acid, 60 g of epoxidized soybean oil, and 16.7 g of adipic acid were charged into a clean reactor. The mixture was then heated to 130^{∼}140°C under nitrogen. After holding at 130^{∼}140°C for 30 minutes, 140 g of epoxidized soybean oil was fed into the reactor at 4.7 g/min. After all of the 140 g of epoxidized soybean oil was added, the mixture was kept at 130^{∼}140°C for 4 to 8 hours to obtain the targeted viscosity (2,000 to 10,000 cps) for the resulting bio-based prepolymer.

A composition comprising an aqueous-based dispersion according to one embodiment of the present invention was prepared using 1000 g of the bio-based prepolymer described in the preceding paragraph. The bio-based prepolymer was warmed in a pot to 65°C. When the prepolymer was in a molten state, 90g of Sermul EA151 (nonylphenol ethersulphate sodium salt surfactant solution in water) was added to the pot while stirring the contents within the pot. After addition of all 90g of Sermul EA151, stirring was continued for about 1 minute and the temperature of the contents within the pot was allowed to drop to about 60°C. Next, 500g of water was added to the contents within the pot at a rate of 250g per minute while stirring to provide a stable dispersion having a mean particle size of 0.4 microns. The resulting dispersion had a solids content of 57.0 % and a viscosity of 450 centipoise (Brookfield sp. 3/50 rpm).

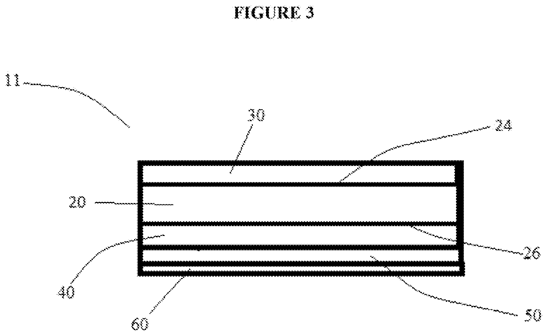

Figure 3 illustrates a cross-sectional view of a particular label comprising a multi-layer compostable film and adhesive according to certain embodiments of the present invention. As shown in Figure 3, this particular label 11 includes a core layer 20 having a first surface 26 and a second surface 24. In this particularly illustrated embodiment, skin layers 30, 40 are positioned directly adjacent opposing surfaces 24, 26 of the core layer 20. Label 11 includes an adhesive layer 50 positioned directly adjacent skin 40 and a releasable liner 60 positioned directly adjacent and below the adhesive layer 50 such that the adhesive layer is disposed, or sandwiched, directly between skin 40 and releasable liner 60.

In another aspect, the present invention provides a form comprising a plurality of compostable labels. The form, such as in the form of a sheet, of compostable labels may comprise the incorporation of a mono-layer and/or multi-layer film according to certain embodiments of the present invention. The labels may be releasably attached or adhered to a carrier sheet. In this regard, the form including the labels may be processed through any suitable printer for imparting the desired indicia onto a plurality of the labels at a single time.

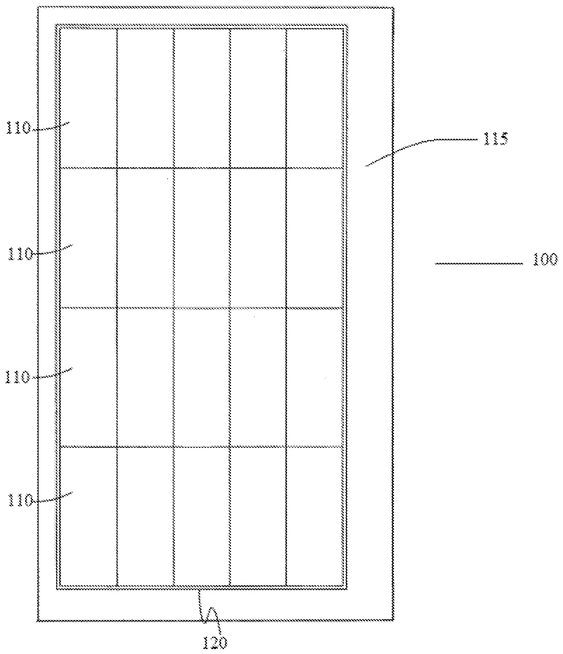

Figure 4 illustrates a particular form including a plurality of labels, such as compostable labels, according to certain embodiments of the present invention. In particular, Figure 4 shows an embodiment according to certain embodiments in which form 100 includes a plurality of individual labels 110, according to certain label-embodiments of the present invention, releasably attached or adhered to a carrier sheet 115. In this particular embodiment, the plurality of individual labels 110 are arranged adjacent to each other and form a matrix of labels 120. The form 100 may be processed through a suitable printing or image-producing device to impart printed indicia on the labels 110 at a single time. In this regard, the form 100 may be suitable for on-demand printing, such as printing at the time of need or just prior to adhering labels onto a desired object.

In some embodiments, the present invention includes a continuous roll of compostable labels according to certain embodiments of the present invention. The continuous roll of labels, such as compostable labels, may comprise a plurality of labels incorporating mono-layer and/or multi-layer films according to certain embodiments of the present invention. The labels may be releasably attached or adhered to a carrier layer, such as a releasable liner, film, or other suitable carrier form. In this regard, the form including the labels may be processed through an appropriate printer for imparting the desired indicia onto a plurality of the labels at a single time. In some embodiments, the continuous roll may be fed or processed through an appropriate printer or image-producing device for imparting the desired indicia onto one or more of the labels at a single time or sequentially in time, such as printing one label at a time on an as-needed basis.

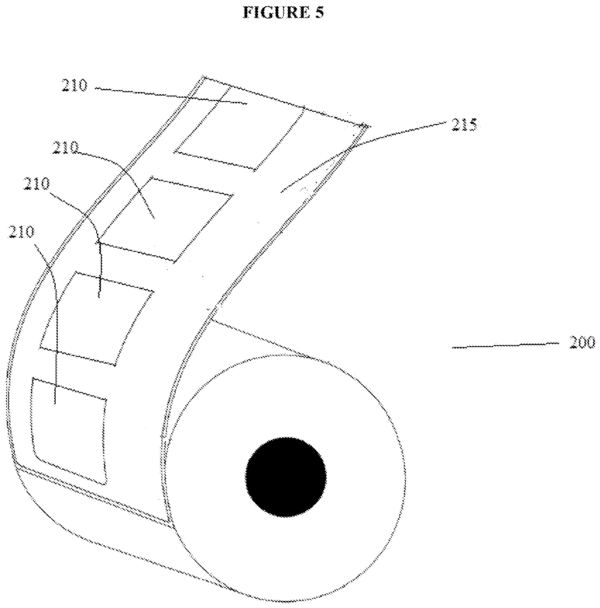

Figure 5 illustrates a particular continuous roll of labels according to certain embodiments of the present invention. In particular, Figure 5 shows an embodiment according to certain embodiments in which the continuous roll 200 includes a plurality of individual labels 210, according to certain label-embodiments of the present invention, releasably attached or adhered to a carrier film 215. In this particular embodiment, the plurality of individual labels 210 is serially arranged along the length of the carrier film 215. The continuous roll 200 may be processed through a suitable printing or image-producing device to impart printed indicia on the labels 110 serially. For example, a single label, or more, may be printed at a single time. In this regard, the continuous roll 200 may be suitable for on-demand printing, such as printing at the time of need or just prior to adhering labels onto a desired object.

### Examples

The present disclosure is further illustrated by the following examples, which in no way should be construed as being limiting. That is, the specific features described in the following examples are merely illustrative, and not limiting.

Numerous compostable films were made according to certain embodiments of the present invention. For example, Table 1 summarizes the fabrication of six (6) different compostable films (i.e., F1 through F6) using a variety of known compostable materials at varying weight percentages. As shown in Table 1, each of these particular films included 12 wt.% of Stanbridge Color 57304 (white masterbatch). Moreover, each of these films was prepared using a traditional blown process.

As shown in Table 2, a film comprising 100 wt.% of Novamont's compostable Mater-Bi EF05S material was formed by a casting process. Table 3 summarizes the fabrication of six (6) additional compostable films according to certain embodiments of the present invention utilizing a blown process. Tables 4 and 5 summarize the fabrication of even more compostable films utilizing a casting process.

**TABLE 1**

| | **Blown process** | **Melt Index** | **Wt.%** | | | | | |
|---|---|---|---|---|---|---|---|---|
| **Supplier** | **ID** | | F1 | F2 | F3 | F4 | F5 | F6 |
| Cereplast | Compostable 3002 | 4.0 | 88 | | | | | |
| BASF | Ecovio F Blend C2224 | <2.5 | | 88 | 60 | | | |
| Standridge Color | 57304 | 5.0 | 12 | | | | | |
| BASF | Ecoflex F blend C1200 | 3.5 | | | 28 | | | |
| Heritage Plastics | BioTuf 970 | 5.0 | | | | 88 | | |
| DaniMer Scientific | 12291 | 1.5 | | | | | 88 | |
| Novamont | Mater-Bi EF05S | 4.0 | | | | | | 88 |

**TABLE 2**

| | **Cast process** | **Melt Index** | **Wt.%** |
|---|---|---|---|
| **Supplier** | **ID** | | 1 |
| Novamont | Mater-Bi EF05S | 4.0 | 100 |

**TABLE 3**

| | **Blown process** | **Melt Index** | **%** | | | | | |
|---|---|---|---|---|---|---|---|---|
| **Supplier** | **ID** | | **1** | **2** | **3** | **4** | **5** | **6** |
| Novamont | Mater-Bi EF05S | 4.0 | 100 | 90 | | | | |
| Novamont | Mater-Bi white | | | 10 | | | | |
| BASF | Ecovio F C2224 | 2.5 | | | 70 | | | |
| BASF | Ecoflex F C1200 | 3.5 | | | 20 | 21 | 22 | 22.5 |
| Haremar | TiO2/Ecoflex | | | | 7.5 | | | |
| Haremar | Antiblock concentrate | | | | 2.5 | 1.5 | 0.5 | |

**TABLE 4**

| | **Cast process** | **Melt Index** | **%** | | | | |
|---|---|---|---|---|---|---|---|
| **Supplier** | **ID** | | 1 | 2 | 3 | 4 | 5 |
| Cereplast | Compostable 3002 | 4.0 | 88 | 80 | | | |
| BASF | Ecovio F Blend C2224 | <2.5 | | | 88 | | |
| BASF | Ecoflex F Blend C1200 | 3.5 | | | | 88 | |
| DaniMer Scientific | DaniMer 12291 | 1.5 | | | | | 88 |
| Standridge Color | 57304 | 5.0 | 12 | 20 | 12 | 12 | 12 |

**TABLE 5**

| | **Cast process** | **Melt Index** | **%** | | |
|---|---|---|---|---|---|
| **Supplier** | **ID** | | 1 | 2 | 3 |
| BASF | Ecoflex F Blend C1200 | 3.5 | 88 | 66 | 44 |
| Standridge Color | 57304 | 5.0 | 12 | | |
| NatureWorks | 4043D | | | 22 | 44 |
| NatureWorks | 4042D | | | | |
| NatureWorks | 4060D | | | | |

After fabrication of the compostable films described above, several of these films were subjected to a variety of tests as summarized in Table 6. In particular, testing was conducted on films identified as F1, F2, F3, F4, and F6 from Table 1. See "Description" area in Table 6.

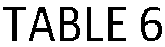

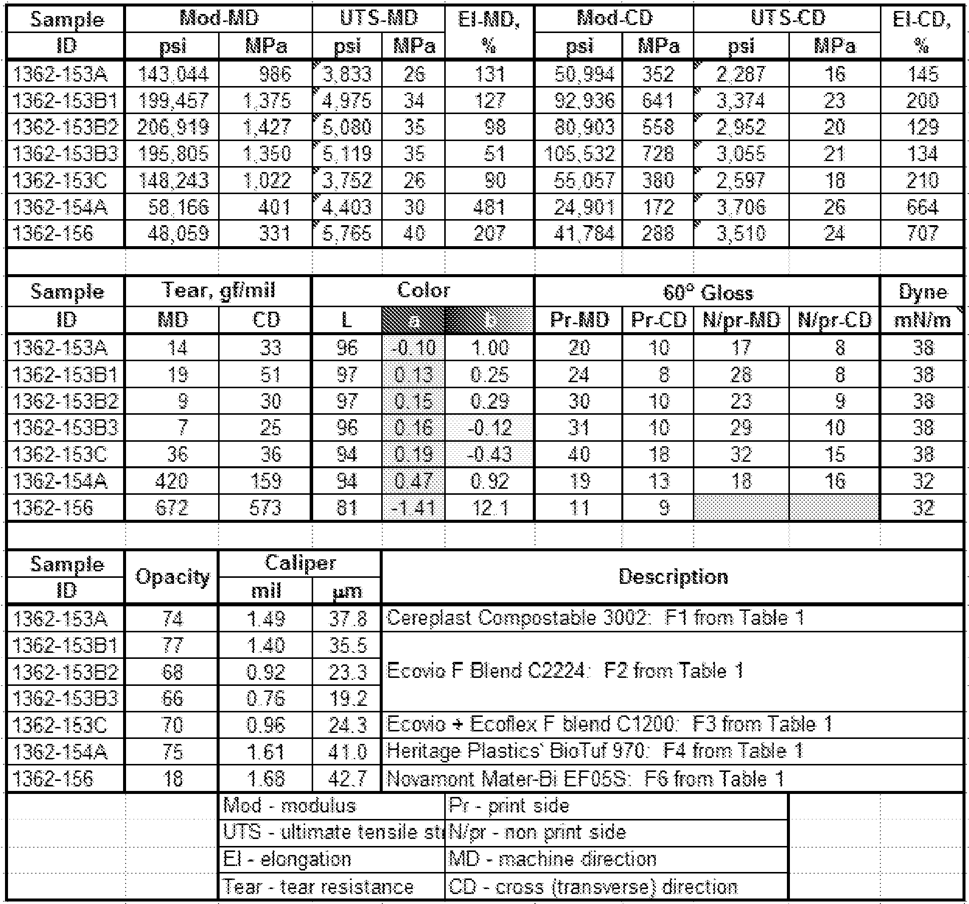

The tests performed for evaluating and reporting properties of the samples illustrated in Table 6 were conducted according to standard testing procedures as summarized in Table 7.

**TABLE 7**

| **Test** | **ASTM** | **TAPPI** |
|---|---|---|
| Tensile strength & elongation | D882* | T494M* |
| Caliper (Emveco) | D2103* | T411* |
| Tear strength | D1004* | T414* |
| L&W bending stiffness | D5342-93* | T402* |
| Color (L-a-b) | D985* | T524* |
| Haze-clarity-transmission | D1003* | |
| Shrink | D2732-08* | |
| Dyne level (wetting tension) | D2578-67* | RC 359 Vol. 53, No.6* |
| Opacity | D589* | T425* |
| Gloss (TAPPI=20 deg) | D523-08* | T653* |
| COF | D1894-11e1* | T549 pm-90* |

| | | |
|---|---|---|
| *the contents of each are hereby incorporated by reference in their entirety. | | |

The results summarized in Table 6 illustrate that films exhibiting a range of desired physical properties may be obtained by utilizing various compostable resins, alone or in various blends. By blending various compostable resins, for instance, a tailored film based on the desired end-use of the film may be obtained. Sample ID 1362-154A, for example, exhibits a modulus in the machine direction that may be suitable for use in a compostable label for labeling generally curved surfaces, such as a variety of fruits including pears, apples, and oranges. Samples with higher modulus in the machine direction may be better suited for incorporation into labels intended for adhering to more planar surfaces.

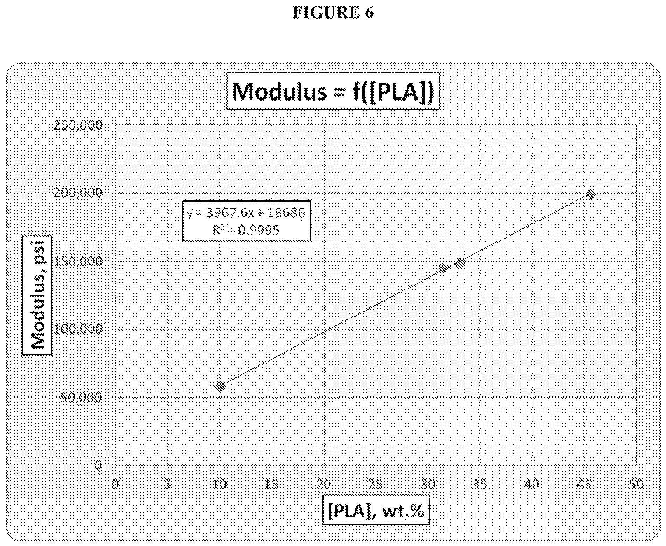

Additionally, compostable films were manufactured in which the weight percent of PLA content of each film was modified and correlated to its modulus. As shown in Table 8, the weight percentage of PLA in the compostable film correlates to a film's resulting modulus. In this regard, compostable films according to certain embodiments of the present invention may be easily tailored to meet a desired-use by controlling and/or selecting the PLA content to be included in the desired compostable film. Figure 6 is a plot of modulus as a function of a film's PLA content as provided in Table

**TABLE 8**

| | **PLA, wt.%** | **Modulus, psi** |
|---|---|---|
| Heritage Bio 970 | 10.0 | 58,166 |
| Haremar film | 31.5 | 145,388 |
| 1362-153C | 33.0 | 148,243 |
| 1362-153B1 | 45.6 | 199,457 |

## Claims

1. A label, comprising:
a film having a facestock layer including a compostable material and an anti-blocking agent, the facestock layer including at least a first surface, wherein the compostable material is compostable according to ASTM D5338 and/or according to ASTM D6400; and
an adhesive layer comprising an adhesive material either positioned adjacent to at least a portion of the first surface of the facestock layer, or positioned one or more layers removed from the first surface of the facestock layer;
wherein the adhesive material is an aqueous-based dispersion having a discontinuous phase including a plurality of bio-based prepolymer particulates dispersed throughout an aqueous-based continuous phase, and
wherein the adhesive material further includes a catalyst.

2. The label according to claim 1, wherein the anti-blocking agent includes a mineral anti-blocking agent comprising silica or diatomaceous earth or an organic anti-blocking agent including polymethylmethacrylate, wherein the anti-blocking agent includes from about 0.01 to about 10% by weight of the facestock layer.

3. The label according to claim 1, wherein the compostable material includes polylactide (PLA), or an aliphatic-aromatic copolyester, or a blend of PLA and an aliphatic-aromatic copolyester, or a polybutylene adipate co-terephthalate (PBAT), or a blend of PLA and a PBAT.

4. The label according to claim 1, wherein the catalyst is one of a water-soluble or a water stable catalyst.

5. The label according to claim 1, wherein the catalyst resides at least predominantly within the aqueous-based continuous phase.

6. The label according to claim 1, wherein the catalyst includes one or more of an organic titanate catalyst, a zirconate catalyst, or combinations thereof.

7. The label according to claim 1, wherein the catalyst comprises a triethanolamine titanium complex.

8. The label according to claim 1, wherein the bio-based prepolymers comprise one or more epoxidized vegetable oils.

9. The label according to claim 8, wherein prepolymers comprise the reaction product of (i) at least one epoxidized vegetable oil and (ii) a dimer acid or anhydride thereof, a trimer acid or anhydride thereof, or a polymerized fatty acid or anhydride thereof, or
wherein prepolymers comprise the reaction product of at least one epoxidized vegetable oil and one or more of the following: (i) a dimer acid or anhydride thereof, a trimer acid or anhydride thereof, and a polymerized fatty acid or anhydride thereof; (ii) a prepolymer or oligomer capped with a carboxylic acid group at both prepolymer or oligomer chain ends, or a branched prepolymer or oligomer with at least two of the prepolymer or oligomer branches and chain ends capped with a carboxylic acid group, wherein the carboxylic acid-capped prepolymer or oligomer is made from (a) an excess of a dibasic acid reacted with (b) a glycidyl or an epoxidized compound having at least two epoxy groups, a diol or polyol, a diamine, or a combination thereof; or a combination of (i) and (ii).

10. The label according to claim 8, wherein the bio-based prepolymers comprise an epoxidized soybean oil.

11. The label according to claim 9, wherein the epoxidized vegetable oil is reacted with a monobasic acid or anhydride thereof to produce a modified epoxidized vegetable oil that is then reacted with a prepolymer or oligomer capped with a carboxylic acid group at both prepolymer or oligomer chain ends, or a branched prepolymer or oligomer with at least two of the prepolymer or oligomer branches and chain ends capped with a carboxylic acid group, wherein the carboxylic acid-capped prepolymer or oligomer is made from (a) an excess of a dibasic acid reacted with (b) a glycidyl or an epoxidized compound having at least two epoxy groups, a diol or polyol, a diamine, or a combination thereof.

12. A label, comprising:
a multi-layer film having a facestock layer including
a core layer comprising a first compostable material and having a core layer thickness, said core layer including a top surface and a bottom surface, wherein the compostable material is compostable according to ASTM D5338 and/or according to ASTM D6400; and
a first skin layer comprising a second compostable material and having a first skin layer thickness, said first skin layer being either positioned directly adjacent to at least a portion of the top surface of the core layer, or positioned one or more layers removed from the top surface of the core layer, wherein said first skin layer thickness being less than said core layer thickness, wherein the compostable material is compostable according to ASTM D5338 and/or according to ASTM D6400; and
an adhesive layer comprising an adhesive material either positioned adjacent to at least a portion of the bottom surface of the core layer, or positioned one or more layers removed from the first surface of the core layer;
wherein the adhesive material is an aqueous-based dispersion having a discontinuous phase including a plurality of bio-based prepolymer particulates dispersed throughout an aqueous-based continuous phase, and
wherein the adhesive material further includes a catalyst.

13. The label according to claim 1 or 12, the adhesive material further comprising one or more dispersing agents, and/or at least one tackifier.

14. The label according to claim 1 or 12, wherein the aqueous-based continuous phase consists of water, or the aqueous-based continuous phase consists of (i) water and (ii) one or more dispersing agents, or the aqueous-based continuous phase comprises water and one or more co-solvents.

15. The label according to claim 12, wherein the bio-based prepolymers comprise one or more epoxidized vegetable oils, or
wherein the bio-based prepolymers comprise one or more epoxidized fatty acids from at least one plant oil, marine oil, other ester of unsaturated fatty acid, or combinations thereof, or
wherein the bio-based prepolymers comprise a thermoplastic epoxy prepolymer or oligomer formed by the reaction product of at least one dibasic acid or anhydride thereof with at least one polyfunctional epoxide.

## Patentansprüche

1. Etikett, umfassend:
einen Film mit einer Deckmaterialschicht, die ein kompostierbares Material und ein Antiblockmittel einschließt, wobei die Deckmaterialschicht mindestens eine erste Oberfläche einschließt, wobei das kompostierbare Material gemäß ASTM D5338 und/oder gemäß ASTM D6400 kompostierbar ist; und
eine Haftmittelschicht, umfassend ein Haftmaterial, das entweder angrenzend an mindestens einen Abschnitt der ersten Oberfläche der Deckmaterialschicht angeordnet ist oder eine oder mehr Schichten entfernt von der ersten Oberfläche der Deckmaterialschicht angeordnet ist;
wobei das Haftmaterial eine Dispersion auf wässriger Basis mit einer diskontinuierlichen Phase ist, die eine Vielzahl von biobasierten Präpolymerteilchen einschließt, die über eine kontinuierliche Phase auf wässriger Basis dispergiert sind, und
wobei das Haftmaterial weiter einen Katalysator einschließt.

2. Etikett nach Anspruch 1, wobei das Antiblockmittel ein mineralisches Antiblockmittel, umfassend Siliziumdioxid oder Diatomeenerde, oder ein organisches Antiblockmittel, einschließend Polymethylmethacrylat, einschließt, wobei das Antiblockmittel etwa 0,01 bis etwa 10 Gew.-% der Deckmaterialschicht beinhaltet.

3. Etikett nach Anspruch 1, wobei das kompostierbare Material Polylactid (PLA) oder einen aliphatisch-aromatischen Copolyester oder ein Gemisch von PLA und einem aliphatisch-aromatischen Copolyester oder ein Polybutylenadipat-co-terephthalat (PBAT) oder ein Gemisch von PLA und einem PBAT einschließt.

4. Etikett nach Anspruch 1, worin der Katalysator einer von einem wasserlöslichen oder wasserstabilen Katalysator ist.

5. Etikett nach Anspruch 1, worin der Katalysator zumindest überwiegend innerhalb der kontinuierlichen Phase auf wässriger Basis liegt.

6. Etikett nach Anspruch 1, wobei der Katalysator einen oder mehrere von einem organischen Titanatkatalysator, einem Zirkonatkatalysator oder Kombinationen davon einschließt.

7. Etikett nach Anspruch 1, wobei der Katalysator einen Triethanolamin-Titan-Komplex umfasst.

8. Etikett nach Anspruch 1, wobei die biobasierten Präpolymere ein oder mehrere epoxidierte Pflanzenöle umfassen.

9. Etikett nach Anspruch 8, wobei Präpolymere das Reaktionsprodukt von (i) mindestens einem epoxidierten Pflanzenöl und (ii) einer Dimersäure oder einem Anhydrid davon, einer Trimersäure oder einem Anhydrid davon oder einer polymerisierten Fettsäure oder einem Anhydrid davon umfassen, oder
wobei Präpolymere das Reaktionsprodukt von mindestens einem epoxidierten Pflanzenöl und einem oder mehreren der folgenden umfassen: (i) eine Dimersäure oder ein Anhydrid davon, eine Trimersäure oder ein Anhydrid davon und eine polymerisierte Fettsäure oder ein Anhydrid davon; (ii) ein Präpolymer oder Oligomer, das mit einer Carbonsäuregruppe an beiden Kettenenden des Präpolymers oder des Oligomers gekappt ist, oder ein verzweigtes Präpolymer oder Oligomer, wobei mindestens zwei der Präpolymer- oder Oligomerzweige und Kettenenden mit einer Carbonsäuregruppe gekappt sind, wobei das mit einer Carbonsäure gekappte Präpolymer oder Oligomer aus (a) einem Überschuss einer zweibasigen Säure hergestellt ist, die mit (b) einem Glycidyl oder einer epoxidierten Verbindung mit mindestens zwei Epoxygruppen, einem Diol oder Polyol, einem Diamin oder einer Kombination davon umgesetzt ist; oder eine Kombination von (i) und (ii).

10. Etikett nach Anspruch 8, wobei die biobasierten Präpolymere ein epoxidiertes Sojaöl umfassen.

11. Etikett nach Anspruch 9, wobei das epoxidierte Pflanzenöl mit einer einbasigen Säure oder Anhydrid davon umgesetzt wird, um ein modifiziertes epoxidiertes Pflanzenöl zu erzeugen, das dann mit einem Präpolymer oder Oligomer umgesetzt wird, das mit einer Carbonsäuregruppe an beiden Kettenenden des Präpolymers oder des Oligomers gekappt ist, oder einem verzweigten Präpolymer oder Oligomer, wobei mindestens zwei der Präpolymer- oder Oligomerzweige und Kettenenden mit einer Carbonsäuregruppe gekappt sind, wobei das mit einer Carbonsäure gekappte Präpolymer oder Oligomer aus (a) einem Überschuss einer zweibasigen Säure, die mit (b) einem Glycidyl oder einer epoxidierten Verbindung mit mindestens zwei Epoxygruppen, einem Diol oder Polyol, einem Diamin oder einer Kombination davon umgesetzt ist, hergestellt ist.

12. Etikett, umfassend:
einen mehrschichtigen Film mit einer Deckmaterialschicht, die
eine Kernschicht, die ein erstes kompostierbares Material umfasst und eine Kernschichtdicke aufweist, wobei die Kernschicht eine obere Oberfläche und eine untere Oberfläche einschließt, wobei das kompostierbare Material gemäß ASTM D5338 und/oder gemäß ASTM D6400 kompostierbar ist; und
eine erste Hautschicht, die ein zweites kompostierbares Material umfasst und eine erste Hautschichtdicke aufweist, wobei die erste Hautschicht entweder direkt angrenzend an mindestens einen Abschnitt der oberen Oberfläche der Kernschicht angeordnet ist, oder eine oder mehrere Schichten entfernt von der oberen Oberfläche der Kernschicht angeordnet ist, wobei die erste Hautschichtdicke geringer als die Kernschichtdicke ist, wobei das kompostierbare Material gemäß ASTM D5338 und/oder gemäß ASTM D6400 kompostierbar ist; und
eine Haftmittelschicht, umfassend ein Haftmaterial, die entweder angrenzend an mindestens einen Abschnitt der unteren Oberfläche der Kernschicht angeordnet ist oder eine oder mehrere Schichten entfernt von der ersten Oberfläche der Kernschicht angeordnet ist, einschließt;
wobei das Haftmaterial eine Dispersion auf wässriger Basis mit einer diskontinuierlichen Phase ist, die eine Vielzahl von biobasierten Präpolymerteilchen einschließt, die über eine kontinuierliche Phase auf wässriger Basis dispergiert sind, und
wobei das Klebematerial ferner einen Katalysator einschließt.

13. Etikett nach Anspruch 1 oder 12, wobei das Haftmaterial weiter ein oder mehrere Dispersionsmittel und/oder mindestens einen Klebrigmacher umfasst.

14. Etikett nach Anspruch 1 oder 12, wobei die kontinuierliche Phase auf wässriger Basis aus Wasser besteht, oder die kontinuierliche Phase auf wässriger Basis aus (i) Wasser und (ii) einem oder mehreren Dispersionsmitteln besteht, oder die kontinuierliche Phase auf wässriger Basis Wasser und ein oder mehrere Co-Lösungsmittel umfasst.

15. Etikett nach Anspruch 12, wobei die biobasierten Präpolymere ein oder mehrere epoxidierte Pflanzenöle umfassen, oder
wobei die biobasierten Präpolymere eine oder mehrere epoxidierte Fettsäuren aus mindestens einem Pflanzenöl, Meeresöl, einem anderen Ester von ungesättigter Fettsäure oder Kombinationen davon umfassen, oder
wobei die biobasierten Präpolymere ein thermoplastisches Epoxy-Präpolymer oder -Oligomer umfassen, das durch das Reaktionsprodukt von mindestens einer zweibasigen Säure oder einem Anhydrid davon mit mindestens einem polyfunktionellen Epoxid gebildet ist.

## Revendications

1. Étiquette comprenant :
un film ayant une couche frontale comprenant un matériau compostable et un agent antiadhérent, la couche frontale ayant au moins une première surface, où le matériau compostable est compostable selon ASTM D5338 et/ou selon ASTM D6400, et
une couche adhésive comprenant un matériau adhésif soit adjacente à au moins une partie de la première surface de la couche frontale, soit distante d'une ou de plusieurs couches de la première surface de la couche frontale ;
où le matériau adhésif est une dispersion à base aqueuse présentant une phase discontinue comprenant une pluralité de particules de prépolymère ayant une base bio, dispersées dans une phase continue à base aqueuse, et
où le matériau adhésif comprend en outre, un catalyseur.

2. Étiquette selon la revendication 1, où l'agent antiadhésif inclut un agent antiadhésif minéral comprenant de la silice ou de la terre de diatomées, ou un agent antiadhésif organique comprenant un poly(méthacrylate de méthyle), où l'agent antiadhésif inclut environ 0,01 à environ 10% en poids de la couche frontale.

3. Étiquette selon la revendication 1, où le matériau compostable comprend un polylactide (PLA) ou un copolyester aliphatique-aromatique, ou un mélange de PLA et d'un copolyester aliphatique-aromatique, ou un poly(adipate-co-téréphtalate de butylène) (PBAT) ou un mélange de PLA et de PBAT.

4. Étiquette selon la revendication 1, où le catalyseur est l'un parmi un catalyseur soluble dans l'eau ou un catalyseur stable dans l'eau.

5. Étiquette selon la revendication 1, où le catalyseur se trouve au moins essentiellement dans la phase continue à base aqueuse.

6. Étiquette selon la revendication 1, où le catalyseur comprend un ou plusieurs parmi un catalyseur titanate organique, un catalyseur zirconate ou leurs combinaisons.

7. Étiquette selon la revendication 1, où le catalyseur comprend un complexe triéthanolamine-titane.

8. Étiquette selon la revendication 1, où les prépolymères à base bio comprennent une ou plusieurs huiles végétales époxydées.

9. Étiquette selon la revendication 8, où les prépolymères comprennent le produit de réaction (i) d'au moins une huile végétale époxydée et (ii) d'un acide dimère ou son anhydride, un acide trimère ou son anhydride, ou un acide gras polymérisé ou son anhydride, ou
où les prépolymères comprennent le produit de réaction d'au moins une huile végétale époxydée et d'un ou de plusieurs des suivants : (i) un acide dimère ou son anhydride, un acide trimère ou son anhydride, et un acide gras polymérisé ou son anhydride ; (ii) un prépolymère ou oligomère coiffé d'un groupe acide carboxylique aux deux extrémités de la chaine du prépolymère ou de l'oligomère, ou un prépolymère ou oligomère ramifié dont au moins deux extrémités des ramifications et de la chaine de prépolymère ou d'oligomère sont coiffées d'un groupe acide carboxylique, où le prépolymère ou l'oligomère coiffé d'un acide carboxylique est composé de (a) un excès d'acide dibasique ayant réagi avec (b) un glycidyle ou un composé époxydé ayant au moins deux groupes époxy, un diol ou polyol, une diamine ou une combinaison de ceux-ci, ou une combinaison de (i) et de (ii).

10. Étiquette selon la revendication 8, où les prépolymères à base bio comprennent une huile de soya époxydée.

11. Étiquette selon la revendication 9, où l'huile végétale époxydée est mise à réagir avec un acide monobasique ou son anhydride pour produire une huile végétale époxydée modifiée, qui est alors mise à réagir avec un prépolymère ou un oligomère coiffé d'un groupe acide carboxylique aux deux extrémités de la chaine de prépolymère ou d'oligomère, ou un prépolymère ou oligomère ramifié dont au moins deux extrémités des ramifications et de la chaine de prépolymère ou d'oligomère sont coiffées d'un groupe acide carboxylique, où le prépolymère ou l'oligomère coiffé d'un acide carboxylique est composé de (a) un excès d'acide dibasique ayant réagi avec (b) un glycidyle ou un composé époxydé ayant au moins deux groupes époxy, un diol ou polyol, une diamine ou une combinaison de ceux-ci.

12. Étiquette comprenant :
un film multicouche ayant une couche frontale incluant
une couche centrale comprenant un premier matériau compostable et ayant une épaisseur de couche centrale, ladite couche centrale incluant une surface supérieure et une surface inférieure, le matériau compostable étant compostable selon ASTM D5338 et/ou selon ASTM D6400 ; et
une première couche pelliculaire comprenant un deuxième matériau compostable et ayant une épaisseur de première couche pelliculaire, ladite première couche pelliculaire étant directement adjacente à au moins une partie de la surface supérieure de la couche centrale, soit distante d'une ou de plusieurs couches de la surface supérieure de la couche centrale, l'épaisseur de la première couche pelliculaire étant inférieure à l'épaisseur de la couche centrale, le matériau compostable étant compostable selon ASTM D5338 et/ou selon ASTM D6400 ; et
une couche adhésive comprenant un matériau adhésif, soit adjacente à au moins une partie de la surface inférieure de la couche centrale, soit distante d'une ou de plusieurs couches de la surface inférieure de la couche centrale ;
où le matériau adhésif est une dispersion à base aqueuse présentant une phase discontinue comprenant une pluralité de particules de prépolymère ayant une base bio, dispersées dans une phase continue à base aqueuse, et
où le matériau adhésif comprend en outre, un catalyseur.

13. Étiquette selon la revendication 1 ou 12, où le matériau adhésif comprend en outre, un ou plusieurs agents de dispersion, et/ou un ou plusieurs tackifiants.

14. Étiquette selon la revendication 1 ou 12, où la phase continue à base aqueuse consiste en de l'eau, ou la phase continue à base aqueuse consiste en (i) de l'eau et (ii) un ou plusieurs agents de dispersion, ou la phase continue à base aqueuse comprend de l'eau et un ou plusieurs co-solvants.

15. Étiquette selon la revendication 12, où les prépolymères à base bio comprennent une ou plusieurs huiles végétales époxydées, ou
où les prépolymères à base bio comprennent un ou plusieurs acides gras époxydés provenant d'au moins une huile végétale, huile marine, autre ester d'acide gras insaturé, ou leur combinaison, ou
où les prépolymères à base bio comprennent un prépolymère ou oligomère thermoplastique époxy, formé par le produit de réaction d'au moins un acide dibasique ou de son anhydride avec au moins un époxyde polyfonctionnel.
